(19) Europäisches Patentamt
European Patent Office
Office européen des brevets

(11) EP 3 832 338 B1

(12) FASCICULE DE BREVET EUROPEEN

(45) Date de publication et mention de la délivrance du brevet:
**13.08.2025 Bulletin 2025/33**

(21) Numéro de dépôt: **20306474.6**

(22) Date de dépôt: **01.12.2020**

(51) Classification Internationale des Brevets (IPC):
***G01S 5/16*** (2006.01) ***G01C 21/30*** (2006.01)
***G06T 7/73*** (2017.01)

(52) Classification Coopérative des Brevets (CPC):
**G01S 5/16; G01C 11/06; G01C 21/3811; G01C 21/3848; G06T 7/579; G06T 7/73;**
G06T 2207/10016; G06T 2207/30252

# (54) PROCEDE DE GEOLOCALISATION ET DE QUALIFICATION DE DISPOSITIFS D'INFRASTRUCTURE DE SIGNALISATION

VERFAHREN ZUR GEOLOKALISIERUNG UND QUALIFIZIERUNG VON INFRASTRUKTURVORRICHTUNGEN ZUR SIGNALISIERUNG

METHOD FOR GEOLOCATION AND QUALIFICATION OF SIGNALLING INFRASTRUCTURE DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.12.2019 FR 1913586**

(43) Date de publication de la demande:
**09.06.2021 Bulletin 2021/23**

(73) Titulaire: **Geosat**
**33610 Canejan (FR)**

(72) Inventeurs:
- **D'ESPARBES, Romain**
  **33600 PESSAC (FR)**
- **FERRERO, Cédrik**
  **33600 PESSAC (FR)**

(74) Mandataire: **Plasseraud IP**
**104 Rue de Richelieu**
**CS92104**
**75080 Paris Cedex 02 (FR)**

(56) Documents cités:
**WO-A1-2018/140656 US-A1- 2018 188 060**
**US-A1- 2018 284 802 US-A1- 2019 137 280**

- **FOOLADGAR FAHIMEH ET AL: "Geometrical Analysis of Localization Error in Stereo Vision Systems", IEEE SENSORS JOURNAL, IEEE SERVICE CENTER, NEW YORK, NY, US, vol. 13, no. 11, 1 November 2013 (2013-11-01), pages 4236 - 4246, XP011527941, ISSN: 1530-437X, [retrieved on 20130925], DOI: 10.1109/ JSEN.2013.2264480**
- **YU HUAN ET AL: "The analysis of measurement accuracy of the parallel binocular stereo vision system", PROCEEDINGS OF SPIE; [PROCEEDINGS OF SPIE ISSN 0277-786X VOLUME 10524], SPIE, US, vol. 9684, 26 September 2016 (2016-09-26), pages 96841I - 96841I, XP060073806, ISBN: 978-1-5106-1533-5, DOI: 10.1117/12.2243156**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 832 338 B1

## Description

La présente invention concerne un procédé de géolocalisation et de qualification de dispositifs d'infrastructure de signalisation comportant une détection et une classification d'objets discrets tels que dispositifs d'infrastructure de signalisation et en particulier de panneaux de signalisation en vue de l'intégration de ces données dans une carte haute résolution.

## Domaine technique

L'invention concerne le domaine de la réalisation de cartes 3D hautes définition pour la géolocalisation de véhicules autonomes en combinant des données GPS/GNSS, une carte haute définition et des données de déplacement notamment par centrale à inertie.

## Technique antérieure

Un véhicule autonome doit connaitre sa position relativement à son environnement en sorte de se déplacer. Sa localisation est possible au moyen d'un GPS/GNSS. Toutefois, en l'absence de GPS/GNSS et dans le cas de signaux satellites perturbés, d'autres méthodes sont nécessaires en sorte d'aider un véhicule à déterminer sa position. Une carte embarquée à haute définition (HD) remplit les manques d'information tout en fournissant une description fiable de l'environnement 3D du véhicule.

Les solutions actuelles pour générer des cartes 3D haute définition et couvrir de vastes régions, sont fastidieuses, nécessitent un temps de travail important et le volume de données nécessité pour ces cartes reste élevé. En parallèle, la reconnaissance d'objets automatisée dans les images et les nuages de points LIDAR a progressé dans les dernières années.

Les systèmes de cartographie comportent un minimum de trois types de données : données géolocalisées, mesures spatiales 3D et visualisation à 360° avec des images optiques panoramiques. Des mesures de géolocalisation de haute qualité sont le fondement pour la création de cartes fidèles et précises. Pour ce faire, les scanners LIDAR fournissent des nuages de points 3D denses et de haute précision qui peuvent représenter la morphologie de l'environnement et les images panoramiques fournissent des informations complémentaires, textures, signalisation, textes et autres détails visuels.

Ces données ensemble aident à créer des cartes 3D denses et très détaillées. Les systèmes de cartographie mobile génèrent plus d'1 gigaoctet de données par 50m ce qui rend la gestion et le traitement des données complexe, nécessite des plateformes de stockage de données de grande capacité et des ressources de calcul et de traitement vidéo puissantes pour le traitement des données, la visualisation, la navigation et la manipulation de ces données.

Le traitement et l'analyse des données de cartographie mobile pour la réalisation de cartes haute définition est délicat et long pour plusieurs raisons :

(1) la nature hétérogène et non structurée des nuages de points 3D, qui sont une technologie relativement récente, les rend difficiles à analyser,
(2) les images 2D lorsqu'elles sont prises seules manquent d'informations spatiales,
(3) la plupart des méthodes de classification et d'extraction de formes nécessitent une importante intervention d'un analyste humain et,
(4) les logiciels autonomes utilisés pour réaliser des cartes HD sont intrinsèquement conçus comme des solutions verticales
(5) la reconnaissance des objets discrets tels que dispositifs de signalisation et leur géolocalisation est complexe.

Pour extraire certains objets comme les objets discrets, notamment de type panneaux ou autre élément de signalisation, il est préférable d'utiliser des images plutôt qu'un nuage de points notamment du fait que les nuages de points ne sont pas adaptés pour la reconnaissance de panneaux.

Ceci passe par une reconnaissance de ces objets discrets et leur géolocalisation.

Pour la géolocalisation il est connu par exemple du document US2018/188060 A1 de combiner des images de caméras et des cartes de profondeur ou nuages de points issues de capteurs de détection et de mesure de distance comme des lidars. Une telle technique nécessite de traiter une masse de données importante.

Le document WO2018/140656 A1 décrit pour sa part de combiner des images panoramiques et des données de distance obtenues par des dispositifs de détection de distance par exemple de type lidar ou radar pour géolocaliser des objets.

Enfin, le document FOOLADGAR FAHIMEH ET AL: "Geometrical Analysis of Localization Error in Stereo Vision Systems", IEEE SENSORS JOURNAL, IEEE SERVICE CENTER, NEW YORK, NY, US, vol . 13, no. 11, 1 novembre 2013 (2013-11-01), pages 4236-4246, XP011527941 propose des méthodes de calcul de position de cibles au moyen d'images stéréo.

**Exposé de l'invention**

La présente demande traite plus particulièrement de la géolocalisation de dispositifs de signalisation et en particulier de panneaux de signalisation dans des images et en particulier dans des images panoramiques et propose un procédé de géolocalisation en repères globaux d'objets discrets à partir d'images issues d'un système d'imagerie sphérique et non-stéréo avec des capteurs de positionnement et de géolocalisation embarqué sur un véhicule en mouvement.

Le procédé de l'invention utilise des images panoramiques unitaires, c'est à dire non stéréo, sphériques ou semi-sphériques géolocalisées prises successivement et combine une partie de classification des objets à base de réseaux neuronaux et une partie algorithmique de calcul de position et de dimensions des objets classifiés en sorte de simplifier la prise de vue et de réduire la masse de données à traiter.

Plus précisément la présente invention propose un procédé selon la revendication 1.

Le dispositif caméra porté par le véhicule mobile comportant plusieurs caméras réparties de manière sphérique adaptées à prendre des photos synchronisées, datées et localisées par des moyens de localisation et de datation tels qu'un système GPS/GNSS, le procédé peut comporter une prise de photos de manière périodique par les caméras dudit dispositif caméra lors du déplacement du véhicule qui les porte, lesdites photos synchronisées, datées et géolocalisées étant traitées dans un logiciel adapté à construire des images panoramiques sphériques à partir desdites photos.

Le dispositif caméra peut comporter cinq caméras pointant dans des directions espacées de 72° dans un plan horizontal autour d'un axe vertical par rapport au plan de roulement du véhicule et une caméra pointant vers le haut sur l'axe vertical, les photos simultanées prises par les 6 caméras sont raccordées pour produire une photo panoramique sphérique sur 360° dans un plan horizontal.

Le procédé peut comporter la fixation d'un point d'origine de coordonnées (0, 0) au niveau des images panoramiques de largeur de W pixels sur une hauteur de H pixels, une étape de reconnaissance et de classification desdits objets au moyen de modèles d'apprentissages profonds à base de réseaux neuronaux produisant un cadre de sélection autour d'un sous-ensemble de pixels qui contient l'objet détecté dans l'image panoramique ainsi son code de classification et une étape de mémorisation:

- dudit cadre de sélection de chaque objet P détecté,
- la hauteur h et la largeur w de ce cadre et,
- les coordonnées i (verticale), j (horizontale) en nombre de pixels d'un repère de position du cadre de sélection contenant ledit objet associé aux photos panoramiques par rapport audit point d'origine.

Le procédé peut comporter la définition du point d'origine de coordonnées (0, 0) de l'image panoramique comme le point en haut à gauche de l'image panoramique et la définition du repère de position i, j relatif à l'origine (0, 0) du cadre de sélection comme le point en haut à gauche du cadre de sélection.

Le procédé de triangulation peut comporter pour une série d'images panoramiques, une étape de détermination de la position angulaire des objets détectés dans chaque image panoramique de ladite série dans laquelle une classification d'objet est présente par rapport au centre de prise de vue qui comprend à partir des dimensions du cadre de sélection :

- un calcul de position du centre A estimé de chaque objet dans l'image panoramique ;

- un calcul d'un rayon r estimé dudit objet tel que r est égal à la moitié de la plus petite des dimensions de largeur w et de hauteur h du cadre de sélection dans l'image panoramique et le calcul de position d'un point B sur le cadre de sélection et le plus proche du point A tel que AB=r ;

- un calcul de la position angulaire du centre A de l'image dudit objet et du point B par rapport au centre O du groupe de caméras 100 dans les coordonnées sphériques caméra, l'image panoramique étant assimilée à une sphère de centre O puis,

- le calcul d'un vecteur $\vec{u}_A$ joignant le centre des caméras O et le centre A de l'objet, le calcul d'un vecteur $\vec{u}_B$ joignant le centre des caméras O et le point B et le calcul d'un cône d'axe $\vec{u}_A$ et d'angle au sommet $\alpha$ tel que

[Math. 1]

$$\alpha = \cos^{-1}(\vec{u}_A \cdot \vec{u}_B)$$

en coordonnées cartésiennes caméra ;

- une transformation dans les coordonnées globales cartésiennes terrestres et une mémorisation des coordonnées des vecteurs $\vec{u}_A$ du centre O des caméras et de l'angle $\alpha$ pour chaque objet de chaque image panoramique.

L'étape de détermination de la position des objets détectés peut en particulier utiliser :

- les paramètres de position des caméras, qui comprennent les coordonnées cartésiennes géolocalisées ($x_0$, $y_0$, $z_0$) du centre O du dispositif caméra et l'orientation ($\Omega$, $\Phi$, K) de chacune des caméras du dispositif caméra ;
- la hauteur et la largeur de l'image panoramique originale H, W ;
- les bordures des cadres de sélection contenant des objets détectés dans les images panoramiques.

L'image panoramique étant considérée comme la partie supérieure de la surface d'une sphère avec le dispositif caméra au centre de cette sphère, le procédé de triangulation comporte préférablement la détermination de la position d'un objet détecté particulier au moyen d'une projection d'un cône dirigé vers le centre A du cadre de sélection dudit objet sur ladite partie supérieure de ladite surface d'une sphère, ledit cône ayant pour apex le centre du dispositif caméra et l'ouverture d'angle $\alpha$ et comprend, pour un objet particulier détecté donné, un calcul d'intersections de paires de cônes générées dans au moins deux images panoramiques distinctes comportant ledit objet et prises à au moins deux endroits $U_0$, $V_0$ différents, en sorte de calculer par triangulation une distance spatiale entre l'objet particulier détecté et les positions des centres du dispositif caméra auxdits au moins deux endroits différents et calculer une position géolocalisée dudit objet particulier détecté.

Préférablement, seules les paires de cônes dont la distance entre leurs apex est limitée par un paramètre de distance D sont prises en compte, le paramètre de distance D étant exprimé en mètres et choisi en fonction de la fréquence spatiale de prise de photos pour réduire le nombre de fausses détections.

Le procédé comporte avantageusement une analyse de validité d'intersections I-J en 3D desdites projections de cônes afin de réduire le nombre de candidats objets détectés et identifier l'unicité des objets et déterminer si des intersections sont suffisamment proches, une conditions de validité d'un candidat objet étant le fait que les vecteurs $\vec{u}_A$ et $\vec{v}_A$ directeurs des paires de cônes soient distants d'une distance inférieure à un paramètre d à l'intersection I-J des cônes, le procédé comprenant en outre une extraction en tant qu'objets valides de représentants satisfaisant à ladite analyse de validité, le stockage de leur position dans le système de coordonnées globales, le stockage de leur classification prédite et le stockage de leur dimension.

L'analyse de validité comporte avantageusement une recherche de nœuds d'intersection et un calcul de proximité entre les axes des cônes pour déterminer si des intersections sont suffisamment proches, au moyen de la génération d'un arbre K-D des points I et J et la sélection à partir dudit arbre K-D des paires de cônes ayant une distance minimale inférieure à un paramètre d à l'intersection I-J des cônes, la valeur en mètres dudit paramètre d étant choisie en fonction de la taille des classes d'objets détectées, et comportant, pour la condition selon laquelle les intersections sont suffisamment proches, un algorithme d'identification de points I et J de plus proche distance des vecteurs $\overrightarrow{u_A}$ et $\overrightarrow{v_A}$ directeurs des paires de cônes se croisant, un algorithme de construction de sphères d'influence P, Q dont le rayon est le rayon du cône selon une perpendiculaire à l'axe directeur du cône autour des points I et J appelés points d'attachement et un algorithme de validation de la condition si les points I et J sont mutuellement contenus dans la sphère d'influence du cône opposé les axes des cônes étant alors contenus dans le cône opposé à l'intersection.

Le procédé peut comporter, pour toutes les paires de cônes dont les intersections sont suffisamment proches et dont les vecteurs directeurs sont mutuellement contenus dans les cônes et lorsque deux points d'attachement ou plus ont été trouvés, une analyse de détection d'intersections parasites, ladite analyse comportant la réalisation d'un graphe :

- pour lequel chaque point d'attachement constitue un nœud,
- pour lequel deux nœuds sont connectés s'ils satisfont les conditions intersections suffisamment proches et vecteurs directeurs mutuellement contenus dans les cônes,

ladite analyse comportant en outre pour chaque composante connexe du graphe, un choix du nœud ayant le degré maximal de liaisons comme représentant d'un objet unique et un tri par degrés décroissants de connectivité desdits représentants puis un processus itératif de validation et de soustraction du représentant d'ordre les plus élevé et des cônes convergeant vers ces derniers, d'analyse de convergences de cônes restants et de suppression des représentants se retrouvant sans cônes convergents, ledit processus itératif étant réitéré jusqu'à ce que tous les représentants aient été validés ou invalidés.

**Brève description des dessins**

D'autres caractéristiques, détails et avantages de l'invention apparaîtront à la lecture de la description détaillée ci-après, et à l'analyse des dessins annexés, sur lesquels :

[Fig. 1] montre un exemple de photographie panoramique ;

[Fig. 2] montre un schéma de système de repère caméra en coordonnées sphériques ;

[Fig. 3] montre un schéma de système de repère global en coordonnées cartésiennes ;

[Fig. 4] montre un schéma de repérage angulaire caméras ;

[Fig. 5] montre un schéma d'image projetée sur une sphère centrée sur les caméras ;

[Fig. 6] montre un traitement de panneau selon un aspect de la demande ;

[Fig. 7] montre une représentation de deux angles solides convergents vers un point triangulé ;

[Fig. 8] montre un exemple de détection d'objets sur une trajectoire ;

[Fig. 9] montre un logigramme des étapes d'un premier procédé de la demande ;

[Fig. 10] montre un logigramme des étapes d'un second procédé de la demande ;

[Fig. 11] est une représentation schématique d'un véhicule de prise d'images

[Fig. 12] montre un graphe correspondant à la détection d'objets de la figure 8.

**Description des modes de réalisation**

Les dessins et la description ci-après décrivent des exemples de réalisation non limitatifs utiles à la compréhension de l'invention.

Pour la génération de cartes HD, il est souhaitable de procéder à une détection et une classification des routes et panneaux de signalisation à partir des images panoramiques.

Les images panoramiques 11 telles que représentées en figure 1 sont prises à partir de véhicules mobiles 1 tels que représentés schématiquement à la figure 11 équipés de caméras panoramiques 2a, 2b, par exemple un assemblage de caméras, appelé dispositif caméra panoramique, qui peut notamment comporter cinq caméras 2a pointant dans des directions espacées de 72° dans un plan horizontal autour d'un axe vertical par rapport au plan de roulement du véhicule et une caméra 2b pointant vers le haut sur l'axe vertical. Les caméras prennent des photos synchronisées, datées et localisées par des moyens de localisation et de datation tels qu'un système GPS/GNSS 3 et une centrale inertielle. L'antenne de GNSS/GPS est normalement positionnée le plus près possible de la centrale inertielle et dans l'axe vertical de la centrale inertielle et se retrouve à proximité immédiate du bloc de caméras Le véhicule peut en outre être équipé d'un dispositif LIDAR pour scanner l'environnement pour générer des nuages de points de réalisation de cartes 3D.

Les 6 photos prises par les caméras sont raccordées pour produire une photo panoramique sur 360° dans un plan horizontal.

Verticalement, la partie inférieure de la photo ne comporte pas d'informations du fait du champ de vision des caméras mais est utilisée pour compléter l'image sur 180°. L'image est référencée pour avoir un point de coordonnées 0, 0 au point haut à gauche et a une largeur de W pixels sur une hauteur de H pixels, par exemple 1920 pixels selon une direction horizontale et 1080 pixels selon une direction verticale.

Les caméras prennent des photos de manière synchronisée lors du déplacement du véhicule qui les porte, par exemple tous les deux mètres. Les images unitaires sont traitées dans un logiciel adapté à construire une image panoramique à partir des six images simultanées.

Les problématiques associées à la reconnaissance et au positionnement d'objets comme des panneaux sur une carte à partir d'image panoramiques sont, d'une part, de savoir si les images de panneaux qui se répètent dans plusieurs images panoramiques correspondent au même panneau ou à des panneaux différents et, d'autre part, l'impossibilité de connaître la position réelle d'un panneau à partir de son image sur une image panoramique.

La description qui suit prend l'exemple des panneaux de signalisation mais la méthode décrite s'applique à tout objet discret que l'on souhaite géolocaliser, comme des feux de signalisation, des abris d'arrêt autobus ou autres objets discrets dont la géolocalisation est souhaitée.

Le procédé a également été testé dans des environnements ferroviaires pour géolocaliser des bornes et des dispositifs au sol. Des marquages au sol ponctuels pourraient en outre être géolocalisés par la présente méthode, comme les carrés des lignes de "cédez le passage", les symboles de vélo sur les bandes cyclables, les bouches d'égouts. Toutefois, plus les objets à détecter sont grands, moins la géolocalisation est précise.

De manière générale, les informations nécessaires sur une image panoramique comportant au moins un objet à géolocaliser sont : la classe prédite de l'objet détecté, les coordonnées en pixels d'un cadre de sélection d'une sous-image comprenant l'objet à géolocaliser, les dimensions h, w du cadre de sélection de la sous-image, le nom de l'image panoramique, son orientation et sa géolocalisation.

Une étape préalable au procédé de la présente demande est la création d'un modèle de reconnaissance d'objets MRP, comme des panneaux 400, sous forme d'un réseau neuronal au moyen d'une base d'apprentissage qui contient des exemplaires des classes d'intérêt de ces objets. Ce modèle de reconnaissance de panneaux 400 est ensuite utilisé pour reconnaitre les panneaux dans des images panoramiques à traiter.

Les classes d'objets sont notamment des regroupements de types d'objets à trouver. En fonction de la taille de la base de données et du nombre des échantillons, une classe peut contenir un type d'objet mais aussi une famille d'objets. Par exemple, pour des panneaux, une classe peut contenir le type panneau stop, mais aussi un type de panneau tel que panneaux de direction. La granularité de la classe peut notamment varier en fonction de la quantité de données disponibles ou à traiter.

Selon la présente demande, le procédé commence par une succession d'étapes de prise des images panoramiques 11 par un ou plusieurs véhicules mobiles 1 porteurs de dispositifs caméra panoramique discutés plus haut. Un exemple d'image panoramique est donné à la figure 1. Dans cette image, les coordonnées i, j en pixels d'un point P sont des coordonnées cartésiennes à partir d'un point d'origine (0, 0) en haut à gauche de l'image.

L'image fait en outre W pixels en largeur ce qui correspond à 360° et H pixels en hauteur sur 180° avec une bande inférieure 10 noire sur la partie d'image masquée par le véhicule.

Une fois les images prises et sauvegardées dans une base de données ou un fichier 500, selon la figure 9, des d'étapes d'inférence, par le modèle sur les nouvelles images à traiter, réalisent une reconnaissance et une classification d'objets 410 dans les images panoramiques au moyen du réseau de neurones. Ceci permet de reconnaitre les classes des objets détectés, par exemple des classes de panneaux, la classe feu de signalisation etc. A chaque objet détecté dans chaque image, va être associée la classe détectée. De même, un cadre de sélection comme représenté à la figure 6 discutée plus bas va donner les dimensions maximales de l'objet dans l'image correspondante.

Une base de données ou un fichier 300 avec les objets classifiés dans les images et les photos et positions des caméras est alors créé.

Ensuite une partie importante pour le positionnement des objets détectés et classifiés à partir d'images de cartographie mobile dans une carte 3D est de déterminer leurs coordonnées géolocalisées. Pour ce faire la présente demande propose d'effectuer une triangulation des objets à partir de deux détections ou plus de ces objets.

La triangulation effectuée utilise le principe de la parallaxe. Un minimum de deux images est nécessaire pour que cette méthode fonctionne. Pour chaque panneau ou objet détecté, il faut déterminer sa position par rapport au centre du groupe de caméras, par rapport aux paramètres extrinsèques caméras et sa position dans l'image panoramique.

Des informations particulières associées à chaque image panoramique sont ainsi nécessaires pour extraire la géolocalisation des objets classifiés.

- Les paramètres de position des caméras, qui comprennent les coordonnées cartésiennes géolocalisées du centre O du groupe de caméras 100 ($x_0$, $y_0$, $z_0$) selon la figure 3 et l'orientation de chacune des six caméras ($\Omega$, $\Phi$, K) dans le groupe des 6 caméras 100 selon la figure 4 ;
- La hauteur et la largeur de l'image panoramique originale (H, W) de la figure 1;
- les frontières de tous les cadres de sélection 13 contenant les objets détectés dans les images panoramiques comme le panneau P représenté en figure 6.

Pour la géolocalisation, plusieurs transformations sont nécessaires :

- les pixels d'images doivent être repérés dans les coordonnées sphériques caméra (ρ, θ, φ) selon la figure 2 où les caméras 100 sont disposées au point origine O du repère ;

- les coordonnées sphériques caméra doivent être traduites en coordonnées cartésiennes caméra (X, Y, Z) selon la figure 3 du fait que les coordonnées utilisées pour repérer le véhicule, et donc le centre du dispositif de prise de vue 100, sont des coordonnées cartésiennes, et enfin ;

- les coordonnées cartésiennes caméra doivent être traduites en coordonnées globales ($x_0$, $y_0$, $z_0$) selon la figure 3 (par exemple les coordonnées géodésiques WGS-84).

Le résultat attendu est la détermination de la géolocalisation d'une position P des objets classifiés en coordonnées globale (x, y, z).

Dans la suite on considèrera un panneau de signalisation.

Pour géolocaliser les panneaux, il y a lieu de déterminer la position de chaque panneau détecté par rapport au centre de la caméra et par rapport à l'image panoramique. Des angles solides 110 sont projetés depuis le centre de la caméra 100 dit apex, vers le centre A du cadre de sélection 13 du panneau détecté appelé la sous image comme représenté en figure 5.

On appelle « sous-image » un sous-set des pixels de l'image panoramique incluant l'objet à géolocaliser, le cadre de sélection encadrant la sous image.

La position de la sous image du panneau de signalisation par rapport au centre de la caméra peut être considérée comme une partie de la surface d'une sphère 120 (l'image panoramique) avec le dispositif caméra 100 au centre de cette sphère.

Pour chaque sous image, des angles solides, les cônes 110, sont générés de la manière suivante. De manière conservatrice, une ouverture d'angle solide peut alors être définie par la distance radiale r entre les coordonnées centrales, A, du cadre de sélection et donc du panneau de signalisation, au bord le plus proche du cadre de sélection de la figure 6 selon la relation :

[Math. 2]

$$A = \left(i + \frac{h}{2}, j + \frac{w}{2}\right)$$

avec :

[Math. 3]

$$r = \frac{\min(w,h)}{2}$$

Ici, (i, j) sont les coordonnées du pixel le plus haut à gauche de la sous image 13 englobant le panneau, h et w sont respectivement la hauteur et la largeur de la sous image. Les coordonnées du point A dans l'image sont verticalement $A_i$=i+h/2 et horizontalement $A_j$=j+w/2. Ceci permet aussi de définir un point B du cadre de sélection le plus proche de A sur le périmètre défini par le rayon r.

La transformation des coordonnées en pixels du point A central de la sous image de coordonnées ($A_i$, $A_j$) en coordonnées sphériques caméra (transformation partielle, car il n'y a pas de dimension de profondeur) est réalisée ensuite comme suit :

Dans le plan horizontal l'angle φ est :

[Math. 4]

$$\varphi = \left(\pi - \frac{2A_j\pi}{W}\right) \text{modulo } 2\pi$$

Pour cette formule, comme le centre de l'image correspond à un angle $\varphi_0$=0, on doit soustraire $2A_j\pi/W$ de $\pi$ pour obtenir la valeur de l'angle $\varphi$.

Dans le plan vertical l'angle $\theta$ est :

[Math. 5]

$$\theta = \frac{A_i\pi}{H} \text{modulo } \pi$$

Dans ce calcul la largeur de l'image correspond à W en pixels et à $2\pi$ en coordonnées sphériques et la hauteur de l'image correspond à H en pixels et à $\pi$ en coordonnées sphériques.

Pour chaque sous-image, des angles solides (des cônes) sont générés en affectant une valeur 1 au paramètre $\rho$ du vecteur définissant l'axe du cône dans les coordonnées sphériques caméra.

Pour se replacer dans le système de coordonnées global, plusieurs transformations sont réalisées.

Les coordonnées cartésiennes caméra sont exprimées en coordonnées sphériques caméra sous la forme :

[Math. 6]

$$X = \rho \sin(\theta) \cos(\varphi),$$

[Math. 7]

$$Y = \rho \sin(\theta) \sin(\varphi),$$

[Math. 8]

$$Z = \rho \cos(\theta)$$

avec $\rho$=1 deux vecteurs $\vec{u}_A$ et $\vec{u}_B$ sont définis tels que en utilisant les angles déterminés pour les points A et B on ait :

[Math. 9]

$$\vec{u}_A = (X_A, Y_A, Z_A)$$

[Math. 10]

$$\vec{u}_B = (X_B, Y_B, Z_B)$$

avec une origine en (0, 0, 0) centre de l'ensemble de caméras.

L'angle entre ces deux vecteurs unitaires permet de calculer l'ouverture de l'angle solide à partir du produit scalaire de ces deux vecteurs tel que :

[Math. 11]

$$\alpha = \cos^{-1}(\overrightarrow{u_A} \cdot \overrightarrow{u_B})$$

Enfin, le vecteur du cône, $\vec{u}_A$ est transformé dans les coordonnées globales :

[Math. 12]

$$(x_A, y_A, z_A) = (X_A, Y_A, Z_A).R^T$$

Où R est la matrice de rotation utilisant les paramètres extrinsèques de la caméra :

[Math. 13]

$$R = R_z(K)\, R_y(\Phi)\, R_x(\Omega)$$

soit aussi:

[Math. 14]

$$R = \begin{pmatrix} cos(K) & -sin(K) & 0 \\ sin(K) & cos(K) & 0 \\ 0 & 0 & 1 \end{pmatrix} \cdot \begin{pmatrix} cos(\Phi) & 0 & sin(\Phi) \\ 0 & 1 & 0 \\ -sin(\Phi) & 0 & cos(\Phi) \end{pmatrix} \cdot \begin{pmatrix} 1 & 0 & 0 \\ 0 & cos(\Omega) & -sin(\Omega) \\ 0 & sin(\Omega) & cos(\Omega) \end{pmatrix}$$

et $R^T$ la matrice transposée.

Ainsi, pour chaque image panoramique, des vecteurs, partant du centre du groupe de cameras ($x_0$,$y_0$,$z_0$) de la figure 3 en coordonnées globales au moment de la prise de cette image et pointant vers le centre du panneau ($x_A$,$y_A$,$z_A$) en coordonnées globales tel que vu dans l'image panoramique, créent des lignes orientée dans l'espace. Chaque image panoramique produit ainsi un cône centré sur la ligne allant du centre de cette image au point A d'un'objet dans cette image et d'angle d'ouverture $\alpha$.

Pour une classe d'objets donnée issue de la classification, une recherche d'intersections des cônes, issus à partir d'une série d'images panoramiques et des données de trajectoires pour les points de prises des images contenant des objets détectés, est ensuite réalisée. Ceci permet de calculer une distance spatiale entre le ou les objets détectés et les positions du centre de la caméra au moment des prises de photos par triangulation. Pour réduire le nombre de fausses détections, seules les paires de cônes dont les apex sont séparés d'une distance 204 selon la figure 8 inférieure à un paramètre de distance D sont prises en compte. Cette recherche peut être réalisée au moyen d'un arbre K-D sur les points des trajectoires qui permet d'accélérer la recherche des paires de cônes qui sont proches entre eux. Un tel arbre K-D n'est pas obligatoire, mais il allège le calcul quand la quantité de données augmente. D est exprimé en mètres et son choix dépend de la distance maximale à laquelle on considère qu'on ne peut plus détecter un objet sur une image. Le paramètre D va être adapté par l'opérateur en fonction de la fréquence spatiale des prises de vues. Par exemple pour une classe d'objets panneaux, un véhicule prenant des photos tous les 2m, D peut être défini à 100m.

La périodicité de la prise des photos est préférablement déterminée en fonction d'une distance parcourue par le véhicule, par exemple les photos sont prises tous les mètres ou tous les deux mètres parcourus. Dans certaines configurations la périodicité peut être déterminée selon une fréquence temporelle, la vitesse de véhicule déterminant alors l'intervalle en mètres entre les photos. Pour un véhicule qui roule à 50 km/h et des caméras qui prennent les photos à 14 fps, on obtiendrait dans ce cas une photo par mètre et une sauvegarde d'une photo par 2 ou 3 mètres pourrait être réalisée.

La figure 7 représente deux vecteurs $\overrightarrow{u_A}$ et $\overrightarrow{v_A}$ centraux respectivement aux cônes 110a, 110b et correspondant à la détection d'un panneau dans deux images prises avec les caméras en position $U_0$ et en position $V_0$. Pour réduire le nombre de candidats détectés et identifier l'unicité d'un objet, les projections des cônes 110a, 110b sont analysées pour déterminer les points d'intersections en 3D qui représentent la position géolocalisée des objets dans l'espace.

Comme les vecteurs cônes sont tridimensionnels et du fait d'imprécisions dans les mesures, les vecteurs cônes peuvent ne pas se croiser parfaitement ce qui crée plusieurs intersections proches. Des intersections sont considérées comme valides si plusieurs conditions sont réunies :

i - Elles doivent être suffisamment proches ;

ii - Les vecteurs directeurs sont mutuellement contenus dans les cônes et ;

iii - L'intersection n'est pas une intersection parasite.

Pour la condition i, déterminer si des intersections sont suffisamment proches, un arbre K-D (KD-Tree en anglais) est généré et seules les paires de cônes dont la distance minimale 130 entre leurs axes définis par les vecteurs $\overrightarrow{u_A}$ et $\overrightarrow{v_A}$ est inférieure à un paramètre d sont considérées comme satisfaisant cette condition. La valeur de d en mètres est choisie en fonction de la taille des objets d'une classe d'objets détectée dans les images.

Pour la condition ii, selon laquelle les vecteurs directeurs sont mutuellement contenus dans les cônes, on identifie les points I et J de plus proche distance le long des axes directeurs des paires de cônes se croisant et on construit des sphères d'influence P, Q dont le rayon est le rayon du cône selon une perpendiculaire à l'axe directeur du cône autour de ces points appelés points d'attachement. La condition est satisfaite si les points I et J sont mutuellement contenus dans les sphères d'influence P, Q prises en compte et ces points I et J sont dits mutuellement connectés.

Pour toutes les paires de cônes qui satisfont aux deux conditions i et ii, lorsque deux points d'attachement ou plus ont été trouvés, une position en coordonnées globales est calculée pour chaque point d'attachement.

Un segment de droite IJ orthogonal aux deux lignes formées par les vecteurs $\overrightarrow{u_A}$ et $\vec{v}_A$ directeurs de chaque cône relie les deux droites formées par lesdits vecteurs.

Le problème revient à minimiser la distance $\| J - I \|^2$ du segment de droite IJ. Il y a lieu de déduire la position des points d'attachement en coordonnées globales au travers de l'équation selon laquelle le produit scalaire des deux vecteurs perpendiculaires est nul.

Une équation générale exprime la position des points 3D le long de leur vecteur respectif :

[Math. 15]

$$(x, y, z) = M_0 + t(M_A - M_0)$$

Comme les cônes solides sont définis par leur apex $M_0$ et un point directionnel $M_A$, on a :

[Math. 16]

$$M_0 = (x_0, y_0, z_0)$$

[Math. 17]

$$M_A = (x_A, y_A, z_A)$$

Une valeur particulière de la variable t qui définit la distance des points sur la ligne définie par le vecteur directionnel du cône va définir la position respectivement du point d'attachement I ou J.

Comme le produit scalaire de deux vecteurs directionnels orthogonaux entre eux est nul, on a pour $\overrightarrow{u_A}$ et $\overrightarrow{v_A}$ :

[Math. 18]

$$(I - J) \cdot (U_A - U_0) = 0$$

[Math. 19]

$$(I - J) \cdot (V_A - V_0) = 0$$

En réécrivant les produits scalaires avec l'équation générale de ligne de vecteur où :

[Math. 20]

$$(I - J) = (U_0 - V_0 + t_A(U_A - U_0) - t_B(V_A - V_0))$$

Puis en évaluant les équations de produit scalaire avec les points connus des vecteurs $\vec{u}_A$ et $\overrightarrow{v_A}$, et en réalisant une égalité entre les équations, il est possible de résoudre les équations premièrement pour $t_A$, puis pour $t_B$ afin d'obtenir les coordonnées globales des points d'attachement I et J.

Une fois que les paramètres $t_A$ et $t_B$ ont été obtenus, les rayons des sphères pour chaque vecteur peuvent être calculés avec :

[Math. 21]

$$\sin \alpha_A = R_S / t_A$$

[Math. 22]

$$R_S = t_A \sin \alpha_A$$

Le rayon $R_S$ est utilisé pour définir la sphère d'influence au niveau du point I, un calcul similaire avec $t_B$ permet de calculer la sphère d'influence au niveau du point J. Le rayon Rs est alors l'analogue dimensionnel de r dans l'équation r= (min (w,h)/2 plus haut.

Une fois que les intersections de cônes aux points I et J ont été déterminées, c'est à dire lorsque l'intersection est telle que les couples de sphères pour lesquelles la distance entre leurs centre est inférieure à d et que ces centres sont mutuellement contenus dans la sphère opposée, il faut vérifier la condition iii - L'intersection n'est pas une intersection parasite ou un panneau fantôme.

Pour ce faire, une analyse ultérieure est réalisée pour détecter les intersections uniques ou parasites c'est-à-dire de fausses intersections comme représenté en figure 8 représentant un cas simplifié où sur la trajectoire 200 un véhicule prend des photos aux positions 200a, 200b, 200c, 200d, 200e, de deux panneaux 201 et 202, le panneau 201 étant visible sur les photos prises aux points 200b, 200c, 200d, 200e tandis que le panneau 202 est visible sur les photos prises aux points 200a, 200b, 200c. On voit que dans ce cas, un vecteurs issu d'une photo du panneau 201 en position 200b et un vecteur issu d'une photo du panneau 202 prise au point 200c se coupent en 203. Dans ce cas, l'intersection au point 203 correspond à un panneau fantôme. Ceci vient du fait que dans la réalité, un cône peut avoir une intersection avec plusieurs autres cônes ce qui génère un point d'attachement représentant la position possible d'un objet. Dans un tel cas il y a lieu de supprimer les intersections parasites pour ne garder que les intersections valides aux points 201 et 202. Pour supprimer les points correspondant à un panneau fantômes, un graphe 600 comme représenté en figure 12 pour lequel chaque point d'attachement Ap constitue un nœud est réalisé. Les branches Br du graphe sont les connexions entre un nœud et tous les autres nœuds formant ensemble un composant connexe. Pour chaque composant connexe, le nœud Rp ayant le degré maximal est choisi comme représentant d'un objet unique. Les représentants sont alors triés par degrés décroissants de degré de connectivité.

Pour filtrer les points parasites, les représentants d'ordre les plus élevés et les cônes convergeant vers ces derniers sont validés et retirés. Les convergences de cônes restant sont analysées et, si un ou plusieurs représentants se retrouvent sans cônes convergents, ces représentants sont identifiés comme une projection d'un panneau fantôme ou dupliqué dite projection fantôme et invalidés. L'opération est réitérée jusqu'à ce que tous les représentants aient été validés ou invalidés. Tous les représentants qui réussissent le dernier test sont ensuite extraits comme objets valides, leur position dans le système de coordonnées globales est stockée ainsi que leur classification prédite et leur dimension. Il y a lieu de noter que stocker la dimension mesurée permet ensuite de vérifier automatiquement si la taille des objets détectés est cohérente avec leur taille théorique inhérente à leur classe.

Par exemple dans la figure 12, le point 201 de la figure 8 correspond à un point d'attachement A1 avec un représentant Rp1 sur le graphe 600, le point 202 à un pont d'attachement A2 avec un représentant Rp2 et le point 203 à un point d'attachement A3 avec un représentant Rp3. Le représentant Rp1 ayant 11 liaisons est validé et retiré avec ses cônes puis le représentant Rp2 ayant 5 liaisons est retiré avec ses cônes. Il reste alors le représentant Rp3 qui n'a plus de cônes et est donc classé comme projection fantôme et donc invalidé.

Par ailleurs le rayon Rs du représentant d'ordre le plus élevé permet d'évaluer la dimension spatiale et la taille de l'objet.

Pour faciliter l'élimination de panneaux fantômes dues à des projections de cônes se croisant à des distances beaucoup plus éloignées ou se croisant avec des cônes d'autres panneaux de signalisation, il est possible d'adapter D la distance maximale entre les apex de cônes pris en compte en fonction de la densité des panneaux de signalisation et de réduire D à l'intérieur des villes où la densité de panneaux est grande par rapport aux scènes en dehors des villes où la densité de panneaux est plus faible.

Une fois que l'algorithme d'extraction de signalisation routière a terminé le traitement d'une image panoramique, les sous-images qui n'ont pas pu être triangulées et localisées sont documentées dans un journal séparé pour une vérification manuelle.

L'algorithme de localisation des panneaux de signalisation de la présente demande dépend de transformations géométriques fondamentales et d'une méthode de triangulation tridimensionnelle contrainte.

Les données de sortie sont les coordonnées géolocalisées (x, y, z) des objets et notamment des panneaux dans les coordonnées globales, leur classification prédite et une dimension minimale, r.

Un autre point traité par le filtrages des points parasites, décrit plus haut est l'extraction d'objets fantômes lorsque plusieurs cônes ont une intersection avec un cône unique. Ceci arrive du fait d'une sensibilité de la méthode à la parallaxe aux petits angles couplée à une profusion de cônes qui ajoutent du bruit de fond. Il faut une distance suffisante entre les points de vue (prises d'images) pour bien distinguer les intersections des vecteurs cônes pendant la triangulation.

Par ailleurs, pour éviter de calculer des intersections avec des cônes trop éloignés les uns des autres, le paramètre D qui réduit les interférences entre les cônes pour les instances de panneaux de même type proches peut être adapté en fonction de la localisation des panneaux. D peut être réduit en ville où la densité de panneaux est plus grande et augmenté hors des villes. Puisque les cônes sont projetés à l'infini, selon la trajectoire du véhicule, particulièrement dans les courbes, ronds-points et intersections de voies, réduire le rayon de recherche réduit le bruit de fond. La valeur de D dépend de la taille des objets et de la fréquence de capture des images.

Les paramètres de distance D et d précités sont introduits lors de l'implémentation du procédé sur un jeu d'image correspondant à une surface dont les panneaux ou autres objets sont à géolocaliser.

L'ensemble de ces opérations est synthétisé en figure 10 qui décrit, à partir de la base de donnée des images avec objets classifiés 300 les étapes 305 de lecture des cadres de sélections des objets et 310 lecture des trajectoires des caméras ayant prises les images, l'étape 320 de construction des cônes 320 en parallèle à l'étape 330 de création des arbres K-D de proximité des intersections, l'étape 340 de sélection des objets d'une classe pour réaliser l'étape 350 de recherche des couples de cônes de distance <D par rapport à l'origine de la photo en prenant en compte le résultat de l'étape de création de l'arbre K-D des points de trajectoire puis l'étape 355 de recherche des nœuds d'intersection et le calcul de la proximité entre les axes des cônes pour définir les nœuds correspondant à des objets probables.

Ces étapes sont suivies d'une étape 360 de calcul des composants connexes avec la génération d'un graphe 600 de toutes les connexions de nœuds puis une étape 365 de sélection du nœud de degré maximal pour chaque composant connexe suivie d'une étape 370 d'ordonnancement des nœuds représentatifs par degrés descendants pour réaliser l'étape 375 de filtrage des représentants factices par suppression des vecteurs déjà référencés pour des nœuds d'ordre supérieur et suppression des nœuds à vecteur unique restants.

A la fin de cette opération, les données de sortie sont les objets dont on mémorise à l'étape 380 les coordonnées du centre de l'objet en coordonnées globales, et le rayon de l'objet.

Pour résumer,

A - la méthode de triangulation est réalisée avec les critères : 1) au minimum deux images où le modèle a détecté le même objet, 2) la position en coordonnées globales du centre du bloc des cameras est connu 3) les angles d'orientation de caméras sont connus ce qui permet de calculer la position de l'objet détecté dans l'image dans un repère global.

B - La méthode de triangulation projette les vecteurs directionnels, avec leurs apex au centre du bloc de cameras et recherche les croisements en espace 3D comme positions potentielles de l'objet.

C - La détermination de l'unicité et validité de l'objet ainsi que la performance de temps d'exécution sont assurés grâce à l'introduction de deux paramètres : D, une distance de recherche pour les paires des vecteurs qui se croisent qui rend l'algorithme plus performante en temps d'exécution et d, un seuil de distance déterminant qu'au croisement, les vecteurs sont suffisamment proches pour réduire les candidats points d'intersection.

D - Le procédé prévoit une méthode de filtrage des croisements par une système de vote pour identifier parmi les candidats la position la plus probable des objets.

E - Après avoir calculé le nombre de votes (degré de connexité d'une position) les points sont ordonnés en rang. Les vecteurs projetés sont attribués aux points par leurs degré de connexité décroissant et les points n'ayant plus vecteurs associés sont considérés comme faux positifs et non des positions réelles.

Une fois que toutes les classes d'objets existants dans les objets ont été traitées, le résultat est une base de données 390 des objets intégrables dans une carte 3D.

La présente demande propose ainsi un procédé grandement automatisé pour la reconnaissance et la géolocalisation d'objets discrets tels que des panneaux, des feux de signalisation ou autres objets d'infrastructure à partir d'images panoramiques prises par un ou plusieurs véhicules se déplaçant sur des voies de circulation.
Les véhicules peuvent être notamment des véhicules automobiles se déplaçant sur des voies de circulation routières ou des véhicules ferroviaires pour géolocaliser des dispositifs de signalisation ferroviaires.

## Revendications

**1.** Procédé de géolocalisation d'objets discrets à partir d'une succession d'images panoramiques (11) unitaires géolocalisées prises par un dispositif caméra panoramique à 360° d'un véhicule mobile sur le parcours dudit véhicule qui comprend :

a. - au moins une succession d'étapes (510) de prise desdites images panoramiques unitaires semi-sphériques ou sphériques par un véhicule mobile porteur d'un dispositif caméra panoramique et porteur d'un système de géolocalisation pour lesquelles une périodicité de la prise des photos produisant les images panoramiques unitaires est déterminée en fonction d'une distance parcourue par le véhicule ou selon une fréquence temporelle, la vitesse de véhicule déterminant alors l'intervalle en mètres entre lesdites photos,
b. - une succession d'étapes (410) de reconnaissance et de classification d'objets, dans lesdites images panoramiques unitaires, réalisées au moyen de modèles d'apprentissage profond à base de réseaux neuronaux produisant une détection et une classification d'objets dans les images panoramiques et produisant la définition de cadres de sélection autour de sous-ensembles de pixels qui contiennent les objets détectés dans les images panoramiques et pour chaque objet dans chaque image panoramique, un code de classification et les coordonnées i verticale, j horizontale en nombre de pixels d'un repère de position du cadre de sélection de largeur w et de hauteur h contenant ledit objet dans ladite image panoramique;
c. - une succession d'étapes (305 à 380) de géolocalisation des objets classifiés par un procédé de triangulation desdits objets à partir d'au moins deux desdites images panoramiques unitaires distinctes contenant lesdits objets classifiés et des positions des caméras panoramiques lors des prises desdites images panoramiques contenant lesdits objet classifiés,

lesdites étapes de géolocalisation comportant, pour une série d'images panoramiques unitaires et pour chaque objet détecté :

i.- une étape de détermination, dans chaque image panoramique unitaire de ladite série dans laquelle une classification d'objet est présente, de la position angulaire par rapport au centre de prise de vue dudit objet détecté,
ii.- au moins un changement de repère des coordonnées dudit objet dans les images en coordonnées cartésiennes terrestres en fonction des coordonnées des caméras à l'instant des prises de vue,

iii.- une projection de cônes (110) réalisés à partir d'un angle $\alpha$ dirigé vers le centre A du cadre de sélection dudit objet, ladite projection ayant pour apex le centre du dispositif caméra et une ouverture d'angle définie par un rayon r estimé, par image, égal à la moitié de la plus petite des dimensions de largeur w et de hauteur h du cadre de sélection,

iv.- un calcul d'intersections de paires de cônes (110a, 110b) générées dans au moins deux images panoramiques unitaires comportant ledit objet et prises à au moins deux endroits différents (100a, 100b),

en sorte de calculer par triangulation une distance spatiale entre des objets détectés et les positions des centres du dispositif caméra auxdits au moins deux endroits différents puis de calculer une position géolocalisée desdits objets détectés.

**2.** Procédé de géolocalisation selon la revendication 1 pour lequel, le dispositif caméra porté par le ou les véhicules mobiles (1) comportant plusieurs caméras (2a, 2b) réparties de manière sphérique adaptées à prendre des photos synchronisées, datées et localisées par des moyens de localisation et de datation (3) tels qu'un système GPS/GNSS, le procédé comporte une prise de photos de manière périodique par les caméras dudit dispositif caméra lors du déplacement du véhicule qui les porte, lesdites photos synchronisées, datées et géolocalisées étant traitées dans un logiciel adapté à construire des images panoramiques sphériques à partir desdites photos.

**3.** Procédé de géolocalisation selon la revendication 2 pour lequel le dispositif caméra comportant cinq caméras (2a) pointant dans des directions espacées de 72° dans un plan horizontal autour d'un axe vertical par rapport au plan de roulement du véhicule et une caméra (2b) pointant vers le haut sur l'axe vertical, les photos simultanées prises par les 6 caméras sont raccordées pour produire une photo panoramique sphérique sur 360° dans un plan horizontal.

**4.** Procédé de géolocalisation selon l'une quelconque des revendications précédentes comportant la fixation d'un point d'origine de coordonnées (0, 0) au niveau des images panoramiques de largeur de W pixels sur une hauteur de H pixels, une étape (410) de reconnaissance et de classification desdits objets au moyen de modèles d'apprentissages profonds à base de réseaux neuronaux produisant un cadre de sélection autour d'un sous-ensemble de pixels qui contient l'objet détecté dans l'image panoramique ainsi son code de classification et une étape de mémorisation:

- dudit cadre de sélection (13) de chaque objet P détecté,
- de la hauteur h et la largeur w de ce cadre et,
- des coordonnées i verticale, j horizontale en nombre de pixels d'un repère de position du cadre de sélection contenant ledit objet associé aux photos panoramiques par rapport audit point d'origine.

**5.** Procédé de géolocalisation selon la revendication 4 comportant la définition du point d'origine de coordonnées (0, 0) de l'image panoramique comme le point en haut à gauche de l'image panoramique et la définition du repère de position i, j (13a) relatif à l'origine (0, 0) du cadre de sélection comme le point en haut à gauche du cadre de sélection.

**6.** Procédé de géolocalisation selon la revendication 4 ou 5 pour lequel le procédé de triangulation comporte pour une série d'images panoramiques, une étape de détermination de la position angulaire des objets détectés dans chaque image panoramique de ladite série dans laquelle une classification d'objet est présente par rapport au centre de prise de vue qui comprend à partir des dimensions du cadre de sélection :

- un calcul de position du centre A estimé de chaque objet dans l'image panoramique ;
- un calcul d'un rayon r estimé dudit objet tel que r est égal à la moitié de la plus petite des dimensions de largeur w et de hauteur h du cadre de sélection dans l'image panoramique et le calcul de position d'un point B sur le cadre de sélection et le plus proche du point A tel que AB=r ;
- un calcul de la position angulaire du centre A de l'image dudit objet et du point B par rapport au centre O du groupe de caméras 100 dans les coordonnées sphériques caméra, l'image panoramique étant assimilée à une sphère de centre O puis,
- le calcul d'un vecteur $\vec{u}_A$ joignant le centre des caméras O et le centre A de l'objet, le calcul d'un vecteur $\vec{u}_B$ joignant le centre des caméras O et le point B et le calcul d'un cône d'axe $\vec{u}_A$ et d'angle au sommet $\alpha$ tel que

[Math. 23]

$$\alpha = \cos^{-1}(\vec{u}_A \cdot \vec{u}_B)$$

en coordonnées cartésiennes caméra ;

- une transformation dans les coordonnées globales cartésiennes terrestres et une mémorisation des coordonnées des vecteurs $\vec{u}_A$ du centre O des caméras et de l'angle $\alpha$ pour chaque objet de chaque image panoramique.

**7.** Procédé de géolocalisation selon la revendication 6 pour lequel l'étape de détermination de la position des objets détectés utilise:

- les paramètres de position des caméras, qui comprennent les coordonnées cartésiennes géolocalisées ($x_0$, $y_0$, $z_0$) du centre O du dispositif caméra et l'orientation ($\Omega$, $\Phi$, K) de chacune des caméras (2a, 2b) du dispositif caméra ;
- la hauteur et la largeur de l'image panoramique originale H, W ;
- les bordures des cadres de sélection (13) contenant des objets détectés dans les images panoramiques.

**8.** Procédé de géolocalisation selon la revendication 6 ou 7 pour lequel, l'image panoramique étant considérée comme la partie supérieure de la surface d'une sphère (120) avec le dispositif caméra (100) au centre de cette sphère, le procédé de triangulation comporte la détermination de la position d'un objet détecté particulier au moyen d'une projection d'un cône (110) dirigé vers le centre A du cadre de sélection dudit objet sur ladite partie supérieure de ladite surface d'une sphère, ledit cône ayant pour apex le centre du dispositif caméra et l'ouverture d'angle $\alpha$ et comprend, pour un objet particulier détecté donné, un calcul d'intersections de paires de cônes (110a, 110b) générées dans au moins deux images panoramiques distinctes comportant ledit objet et prises à au moins deux endroits $U_0$, $V_0$ différents, en sorte de calculer par triangulation une distance spatiale entre l'objet particulier détecté et les positions des centres du dispositif caméra auxdits au moins deux endroits différents et calculer une position géolocalisée dudit objet particulier détecté.

**9.** Procédé de géolocalisation selon la revendication 8 pour lequel seules les paires de cônes dont la distance entre leurs apex est limitée par un paramètre de distance D sont prises en compte, le paramètre de distance D étant exprimé en mètres et choisi en fonction de la fréquence spatiale de prise de photos pour réduire le nombre de fausses détections.

**10.** Procédé de géolocalisation selon la revendication 8 ou 9 pour lequel le procédé comporte une analyse de validité d'intersections I-J en 3D desdites projections de cônes afin de réduire le nombre de candidats objets détectés et identifier l'unicité des objets et déterminer si des intersections sont suffisamment proches, une conditions de validité d'un candidat objet étant le fait que les vecteurs $\overrightarrow{u_A}$ et $\overrightarrow{v_A}$ directeurs des paires de cônes (110a, 110b) soient distants d'une distance inférieure à un paramètre d à l'intersection I-J des cônes, le procédé comprenant en outre une extraction en tant qu'objets valides de représentants satisfaisant à ladite analyse de validité, le stockage de leur position dans le système de coordonnées globales, le stockage de leur classification prédite et le stockage de leur dimension.

**11.** Procédé de géolocalisation selon la revendication 10 pour lequel l'analyse de validité comporte une recherche (355) de nœuds d'intersection et un calcul de proximité entre les axes des cônes pour déterminer si des intersections sont suffisamment proches, au moyen de la génération d'un arbre K-D des points I et J et la sélection à partir dudit arbre K-D des paires de cônes ayant une distance minimale (130) inférieure à un paramètre d à l'intersection I-J des cônes, la valeur en mètres dudit paramètre d étant choisie en fonction de la taille des classes d'objets détectées, et comportant (355), pour la condition selon laquelle les intersections sont suffisamment proches, un algorithme d'identification de points I et J de plus proche distance des vecteurs $\overrightarrow{u_A}$ et $\overrightarrow{v_A}$ directeurs des paires de cônes se croisant, un algorithme de construction de sphères d'influence P, Q dont le rayon est le rayon du cône selon une perpendiculaire à l'axe directeur du cône autour des points I et J appelés points d'attachement et un algorithme de validation de la condition si les points I et J sont mutuellement contenus dans la sphère d'influence du cône opposé, les axes des cônes étant alors contenus dans le cône opposé à l'intersection.

**12.** Procédé de géolocalisation selon la revendication 11 comportant, pour toutes les paires de cônes dont les intersections sont suffisamment proches et dont les vecteurs directeurs sont mutuellement contenus dans les cônes opposés à l'intersection et lorsque deux points d'attachement ou plus ont été trouvés, une analyse de détection d'intersections parasites, ladite analyse comportant une étape (360) de réalisation d'un graphe (600):

- pour lequel chaque point d'attachement constitue un nœud,
- pour lequel deux nœuds sont connectés s'ils satisfont les conditions intersections suffisamment proches et vecteurs directeurs mutuellement contenus dans les cônes,

ladite analyse comportant en outre pour chaque composante connexe (A1, A2, A3) du graphe (600), un choix (365) du nœud (Rp1, Rp2, Rp3) ayant le degré maximal de liaisons comme représentant d'un objet unique et un tri (370) par degrés décroissants de connectivité desdits représentants puis un processus itératif de validation et de soustraction du représentant d'ordre les plus élevé et des cônes convergeant vers ces derniers, d'analyse de convergences de cônes restants et de suppression des représentants se retrouvant sans cônes convergents (375), ledit processus itératif étant réitéré jusqu'à ce que tous les représentants aient été validés ou invalidés.

**Patentansprüche**

1. Verfahren zur Geolokalisierung von diskreten Objekten anhand einer Folge von geolokalisierten einzelnen Panoramabildern (11), die von einer 360°-Panoramakamera eines mobilen Fahrzeugs auf der Fahrtstrecke des Fahrzeugs aufgenommen werden, umfassend:

   a. - wenigstens eine Folge von Schritten (510) zur Aufnahme der einzelnen halbsphärischen oder sphärischen Panoramabilder durch ein mobiles Fahrzeug, das eine Panoramakamera und ein Geolokalisierungssystem trägt, wobei eine Periodizität der Aufnahme der Fotos, die die einzelnen Panoramabilder erzeugen, in Abhängigkeit von einer vom Fahrzeug zurückgelegten Strecke oder nach einer zeitlichen Frequenz bestimmt wird, wobei die Fahrzeuggeschwindigkeit dann den Abstand in Metern zwischen den Fotos bestimmt,
   b. - eine Abfolge von Schritten (410) zur Erkennung und Klassifizierung von Objekten in den genannten einzelnen Panoramabildern, die mittels Deep-Learning-Modellen auf Basis neuronaler Netze durchgeführt werden, die eine Erkennung und Klassifizierung von Objekten in den Panoramabildern bewirken und die Definition von Auswahlrahmen um Untergruppen-Pixelgruppen, die die in den Panoramabildern erkannten Objekte enthalten, und für jedes Objekt in jedem Panoramabild einen Klassifizierungscode und die vertikalen Koordinaten i und horizontalen Koordinaten j in Pixelanzahl einer Positionsmarkierung des Auswahlrahmens mit der Breite w und der Höhe h, der das Objekt in dem Panoramabild enthält,
   c. - eine Folge von Schritten (305 bis 380) zur Geolokalisierung der klassifizierten Objekte durch ein Verfahren zur Triangulation der Objekte anhand von wenigstens zwei der separaten einzelnen Panoramabilder, die die klassifizierten Objekte enthalten, und anhand der Positionen der Panoramakameras zum Zeitpunkt der Aufnahme der Panoramabilder, die die klassifizierten Objekte enthalten,

   wobei die Geolokalisierungsschritte für eine Reihe von einzelnen Panoramabildern und für jedes erkannte Objekt Folgendes umfassen:

   i.- einen Schritt zum Bestimmen der Winkelposition des erkannten Objekts in Bezug auf den Aufnahmepunkt in jedem einzelnen Panoramabild der Serie, in dem eine Objektklassifizierung vorhanden ist,
   ii.- wenigstens eine Änderung der Koordinaten des Objekts in den Bildern in kartesischen Landkoordinaten in Abhängigkeit von den Koordinaten der Kameras zum Zeitpunkt der Aufnahme,
   iii.- eine Projektion von Kegeln (110), die aus einem Winkel $\alpha$ in Richtung des Mittelpunkts A des Auswahlrahmens des Objekts erstellt werden, wobei die Projektion den Mittelpunkt der Kameravorrichtung als Scheitelpunkt und eine Winkelöffnung hat, die durch einen geschätzten Radius r pro Bild definiert ist, der gleich der Hälfte der kleineren der Abmessungen der Breite w und der Höhe h des Auswahlrahmens ist,
   iv.- eine Berechnung der Schnittpunkte von Kegelpaaren (110a, 110b), die in wenigstens zwei einzelnen Panoramabildern erzeugt werden, die das Objekt enthalten und an wenigstens zwei verschiedenen Orten (100a, 100b) aufgenommen wurden, um durch Triangulation einen räumlichen Abstand zwischen den erkannten Objekten und den Positionen der Mittelpunkte der Kameravorrichtung an den wenigstens zwei verschiedenen Orten zu berechnen und anschließend eine geolokalisierte Position der erkannten Objekte zu berechnen.

2. Verfahren zur Geolokalisierung nach Anspruch 1, wobei die von dem oder den mobilen Fahrzeugen (1) getragene Kameravorrichtung mehrere sphärisch verteilte Kameras (2a, 2b) umfasst, die dazu ausgebildet sind, synchronisierte, datierte und durch Ortungs- und Datierungsmittel (3) wie ein GPS/GNSS-System lokalisierte Fotos aufzunehmen, wobei das Verfahren das periodische Aufnehmen von Fotos durch die Kameras der genannten Kameravorrichtung während der Bewegung des Fahrzeugs, das sie trägt, umfasst, wobei die genannten synchronisierten, datierten und geolokalisierten Fotos in einer Software verarbeitet werden, die dazu geeignet ist, aus den genannten Fotos sphärische Panoramabilder zu erstellen.

3. Verfahren zur Geolokalisierung nach Anspruch 2, wobei die Kameravorrichtung fünf Kameras (2a) umfasst, die in einer horizontalen Ebene um eine vertikale Achse in Bezug auf die Fahrbahn des Fahrzeugs in Abständen von 72° ausgerichtet sind, sowie eine Kamera (2b), die nach oben auf die vertikale Achse ausgerichtet ist, wobei die von den 6 Kameras gleichzeitig aufgenommenen Fotos zu einem sphärischen Panoramafoto über 360° in einer horizontalen Ebene verbunden werden.

**4.** Verfahren zur Geolokalisierung nach einem der vorhergehenden Ansprüche, welches das Festlegen eines Koordinatenursprungspunkts (0, 0) auf den Panoramabildern mit einer Breite von W Pixeln und einer Höhe von H Pixeln umfasst sowie einen Schritt (410) zum Erkennen und Klassifizieren der Objekte mittels Deep-Learning-Modellen auf Basis neuronaler Netze, die einen Auswahlrahmen um eine Teilmenge von Pixeln erzeugen, die das im Panoramabild erkannte Objekt enthält, sowie dessen Klassifizierungscode, und einen Speicherschritt:

- des Auswahlrahmens (13) jedes erkannten Objekts P,
- der Höhe H und der Breite W dieses Rahmens und
- der vertikalen Koordinate i und der horizontalen Koordinate j in Pixel einer Positionsmarkierung des Auswahlrahmens, der das mit den Panoramafotos verbundene Objekt in Bezug auf den Ursprungspunkt enthält.

**5.** Verfahren zur Geolokalisierung nach Anspruch 4, welches die Definition des Ursprungspunkts der Koordinaten (0, 0) des Panoramabildes als den Punkt oben links im Panoramabild und die Definition der Positionsmarkierung i, j (13a) relativ zum Ursprung (0, 0) des Auswahlrahmens als den Punkt oben links im Auswahlrahmen umfasst.

**6.** Verfahren zur Geolokalisierung nach Anspruch 4 oder 5, wobei das Triangulationsverfahren für eine Reihe von Panoramabildern einen Schritt zur Bestimmung der Winkelposition der in jedem Panoramabild der Reihe erkannten Objekte umfasst, in dem eine Objektklassifizierung in Bezug auf den Aufnahmepunkt erfolgt, die anhand der Abmessungen des Auswahlrahmens Folgendes umfasst:

- eine Berechnung der Position des geschätzten Mittelpunkts A jedes Objekts im Panoramabild;
- eine Berechnung eines geschätzten Radius r des Objekts, wobei r gleich der Hälfte der kleineren der Abmessungen der Breite w und der Höhe h des Auswahlrahmens im Panoramabild ist, und die Berechnung der Position eines Punkts B auf dem Auswahlrahmen, der dem Punkt A am nächsten liegt, wobei AB=r ist;
- eine Berechnung der Winkelposition des Mittelpunkts A des Bildes des genannten Objekts und des Punktes B in Bezug auf den Mittelpunkt O der Kameragruppe 100 in den sphärischen Kamerakoordinaten, wobei das Panoramabild einer Kugel mit Mittelpunkt O gleichgesetzt wird, dann
- Berechnung eines Vektors $\vec{u}_A$, der den Mittelpunkt der Kameras O und den Mittelpunkt A des Objekts verbindet, Berechnung eines Vektors $\vec{u}_B$ der den Mittelpunkt der Kameras O und den Punkt B verbindet, und Berechnung eines Kegels mit der Achse $\vec{u}_A$ und dem Scheitelwinkel $\alpha$, sodass

[Math. 23]

$$\alpha = \cos^{-1}(\vec{u}_A \cdot \vec{u}_B)$$

- in kartesischen Kamerakoordinaten;
- eine Transformation in die globalen kartesischen Erdkoordinaten und eine Speicherung der Koordinaten der Vektoren $\vec{u}_A$ des Mittelpunkts der Kameras O und des Winkels $\alpha$ für jedes Objekt jedes Panoramabildes.

**7.** Verfahren zur Geolokalisierung nach Anspruch 6, wobei der Schritt der Bestimmung der Position der erkannten Objekte Folgendes verwendet:

- die Positionsparameter der Kameras, die die geolokalisierten kartesischen Koordinaten ($x_0$, $y_0$, $z_0$) des Mittelpunkts O der Kameravorrichtung und die Ausrichtung ($\Omega$, $\Phi$, K) jeder der Kameras (2a, 2b) der Kameravorrichtung umfassen;
- die Höhe und Breite des ursprünglichen Panoramabildes H, W;
- die Ränder der Auswahlrahmen (13), die in den Panoramabildern erkannte Objekte enthalten.

**8.** Verfahren zur Geolokalisierung nach Anspruch 6 oder 7, wobei das Panoramabild als oberer Teil der Oberfläche einer Kugel (120) mit der Kameravorrichtung (100) im Mittelpunkt dieser Kugel betrachtet wird und das Triangulationsverfahren die Bestimmung der Position eines bestimmten erkannten Objekts mittels einer Projektion eines Kegels (110) umfasst, der auf den Mittelpunkt A des Auswahlrahmens des Objekts auf dem oberen Teil der Oberfläche einer Kugel gerichtet ist, wobei der Kegel den Mittelpunkt der Kameravorrichtung als Scheitelpunkt und den Winkel $\alpha$ als Öffnungswinkel hat, und für ein bestimmtes erkanntes Objekt eine Berechnung von Schnittpunkten von Kegelpaaren (110a, 110b) berechnet, die in wenigstens zwei unterschiedlichen Panoramabildern erzeugt werden, die das Objekt enthalten und an wenigstens zwei unterschiedlichen Orten $U_0$, $V_0$ aufgenommen wurden, um durch Triangulation einen räumlichen Abstand zwischen dem erkannten bestimmten Objekt und den Positionen der Mittelpunkte der Kameravorrichtung an den wenigstens zwei unterschiedlichen Orten zu berechnen und eine geolokalisierte Position des erkannten bestimmten Objekts zu berechnen.

**9.** Verfahren zur Geolokalisierung nach Anspruch 8, wobei nur Kegelpaare berücksichtigt werden, deren Abstand zwischen ihren Scheitelpunkten durch einen Abstandsparameter D begrenzt ist, wobei der Abstandsparameter D in Metern ausgedrückt und in Abhängigkeit von der räumlichen Frequenz der Fotoaufnahme gewählt wird, um die Anzahl von Fehl-Erkennungen zu reduzieren.

**10.** Verfahren zur Geolokalisierung nach Anspruch 8 oder 9, wobei das Verfahren eine Gültigkeitsanalyse von 3D-Schnittpunkten I-J der Kegelprojektionen umfasst, um die Anzahl der erkannten Objektkandidaten zu reduzieren, die Eindeutigkeit der Objekte zu identifizieren und zu bestimmen, ob Schnittpunkte ausreichend nahe beieinander liegen, wobei eine Gültigkeitsbedingung für einen Objektkandidaten darin besteht, dass die Richtungsvektoren $\vec{u}_A$ und $\overrightarrow{v_A}$ der Kegelpaare (110a, 110b) voneinander um weniger als einen Parameter d am Schnittpunkt I-J der Kegel entfernt sind, wobei das Verfahren ferner das Extrahieren von Vertretern als gültige Objekte umfasst, die die Validitätsanalyse erfüllen, Speichern ihrer Position im globalen Koordinatensystem, Speichern ihrer vorhergesagten Klassifizierung und Speichern ihrer Dimension.

**11.** Verfahren zur Geolokalisierung nach Anspruch 10, wobei die Gültigkeitsanalyse eine Suche (355) nach Schnittpunkten und eine Berechnung der Nähe zwischen den Achsen der Kegel umfasst, um zu bestimmen, ob Schnittpunkte ausreichend nahe beieinander liegen, mittels der Erzeugung eines K-D-Baums der Punkte I und J und der Auswahl aus dem K-D-Baum der Kegelpaare mit einem Mindestabstand (130) kleiner als ein Parameter d zum Schnittpunkt I-J der Kegel, wobei der Wert in Metern des Parameters d in Abhängigkeit von der Größe der erfassten Objektklassen gewählt wird, und umfassend (355) für die Bedingung, dass die Schnittpunkte ausreichend nahe beieinander liegen, einen Algorithmus zur Identifizierung der Punkte I und J mit dem geringsten Abstand von den Richtungsvektoren $\vec{u}_A$ und $\overrightarrow{v_A}$ der sich kreuzenden Kegelpaare, einen Algorithmus zur Konstruktion von Einflusssphären P, Q, deren Radius dem Radius des Kegels senkrecht zur Leitachse des Kegels um die Punkte I und J, die als Befestigungspunkte bezeichnet werden, entspricht, und einen Algorithmus zur Validierung der Bedingung, dass die Punkte I und J gegenseitig in der Einflusssphäre des gegenüberliegenden Kegels enthalten sind, wobei die Achsen der Kegel dann in dem der Schnittpunkt gegenüberliegenden Kegel enthalten sind.

**12.** Verfahren zur Geolokalisierung nach Anspruch 11, umfassend für alle Paare von Kegeln, deren Schnittpunkte ausreichend nahe beieinander liegen und deren Richtungsvektoren gegenseitig in den Kegeln gegenüber dem Schnittpunkt enthalten sind, und wenn zwei oder mehr Befestigungspunkte gefunden wurden, eine Analyse zur Erkennung von Störschnittpunkten, wobei die Analyse einen Schritt (360) zum Erstellen eines Graphen (600) umfasst:

- in dem jeder Befestigungspunkt einen Knotenpunkt bildet,
- in dem zwei Knotenpunkte verbunden sind, wenn sie die Bedingungen "Schnittpunkte ausreichend nahe beieinander" und "Richtungsvektoren gegenseitig in den Kegeln enthalten" erfüllen,

wobei die Analyse außerdem für jede verbundene Komponente (A 1, A2, A3) des Graphen (600) umfasst: eine Auswahl (365) des Knotens (Rp1, Rp2, Rp3) mit dem höchsten Verbindungsgrad als Vertreter eines einzelnen Objekts und eine Sortierung (370) nach abnehmendem Verbindungsgrad der genannten Vertreter, dann einen iterativen Prozess der Validierung und Subtraktion des Vertreters mit dem höchsten Rang und der zu diesen konvergierenden Kegel, Analyse der Konvergenzen der verbleibenden Kegel und Löschung der Vertreter, die keine konvergierenden Kegel mehr haben (375), wobei der iterative Prozess wiederholt wird, bis alle Vertreter validiert oder für ungültig erklärt wurden.

## Claims

**1.** Method for geolocating discrete objects from a series of unitary geolocated panoramic images (11) taken by a 360° panoramic camera device of a mobile vehicle on the route of said vehicle, which comprises:

a. - at least one succession of steps (510) of taking said unitary semispherical or spherical panoramic images by a mobile vehicle carrying a panoramic camera device and carrying a geolocation system for which a periodicity of taking the photographs producing the unitary panoramic images is determined according to a distance travelled by the vehicle or according to a time frequency, the vehicle speed then determining the interval in meters between said photographs,

b. - a succession of steps (410) of recognising and classifying objects, in said unitary panoramic images, performed by means of neural network-based deep learning models producing detection and classification of objects in the panoramic images and producing definition of selection frames around subsets of pixels that contain the objects detected in the panoramic images and, for each object in each panoramic image, a classification code and the coordinates i vertical, j horizontal in number of pixels of a position location of the width selection frame w and height selection h frame containing said object in said panoramic image;

c. - a succession of steps (305 to 380) of geolocating the classified objects by a method of triangulating said objects from at least two of said separate unitary panoramic images containing said classified objects and the positions of the panoramic cameras when taking said panoramic images containing said classified objects,

said geolocation steps including, for a series of unitary panoramic images and for each detected object:

i.- a step of determining, in each unitary panoramic image of said series in which an object classification is present, the angular position with respect to the photographing centre of said detected object,

ii.- at least one change of reference of the coordinates of said object in the images in terrestrial Cartesian coordinates according to the coordinates of the cameras at the time of the shootings,

iii.- a projection of cones (110) made from an angle $\alpha$ directed towards the centre A of the selection frame of said object, said projection having as apex the centre of the camera device and an opening angle defined by an estimated radius r, per image, equal to half of the smallest of the width w and height h dimensions of the selection frame,

iv.- calculating intersections of pairs of cones (110a, 110b) generated in at least two unitary panoramic images including said object and taken at at least two different locations (100a, 100b),

so as to calculate by triangulation a spatial distance between detected objects and the positions of the centres of the camera device at said at least two different locations and then to calculate a geolocated position of said detected objects.

**2.** Geolocation method according to claim 1 wherein, the camera device carried by the mobile vehicle(s) (1) including several cameras (2a, 2b) distributed spherically adapted to take photographs synchronised, dated and located by location and dating means (3) such as a GPS/GNSS system, the method includes taking photos periodically by the cameras of said camera device when the vehicle carrying them is moved, said synchronised, dated and geolocated photographs being processed in software adapted to construct spherical panoramic images from said photographs.

**3.** Geolocation method according to claim 2, wherein the camera device including five cameras (2a) pointing in directions spaced 72° apart in a horizontal plane about a vertical axis with respect to the plane of travel of the vehicle and a camera (2b) pointing upward on the vertical axis, the simultaneous photographs taken by the 6 cameras are connected to produce a 360° spherical panoramic photo in a horizontal plane.

**4.** Geolocation method according to any one of the preceding claims including fixing a point of origin of coordinates (0, 0) on the panoramic images with a width of W pixels over a height of H pixels, a step (410) recognition and classification of said objects by means of deep learning models based on neural networks producing a selection frame around a subset of pixels that contains the object detected in the panoramic image along with its classification code and a step of memorising:

- said selection frame (13) of each detected object P,
- the height h and the width w of this frame and,
- coordinates i vertical, j horizontal in number of pixels of a position mark of the selection frame containing said object associated with the panoramic photographs relative to said point of origin.

**5.** Geolocation method according to claim 4 including defining the point of origin of coordinates (0, 0) of the panoramic image as the top left point of the panoramic image and defining the position marker i, j (13a) relative to the origin (0, 0) of the selection frame as the top left point of the selection frame.

**6.** Geolocation method according to claim 4 or 5, wherein the triangulation method includes, for a series of panoramic images, a step of determining the angular position of the objects detected in each panoramic image of said series wherein an object classification is present with respect to the photographing centre which comprises, from the dimensions of the selection frame:

- a calculation of the position of the estimated centre A of each object in the panoramic image;
- a calculation of an estimated radius r of said object such that r is equal to half of the smallest of the width w and height h dimensions of the selection frame in the panoramic image and calculating the position of a point B on the selection frame closest to the point A such that AB=r;
- a calculation of the angular position of the centre A of the image of said object and of the point B with respect to the centre O of the group of cameras 100 in the camera spherical coordinates, the panoramic image being assimilated to a sphere of centre O, then,
- the calculation of a vector $\vec{u}_A$ joining the centre of the cameras O and the centre A of the object, calculating a vector $\vec{u}_B$ joining the centre of the cameras O and the point B and calculating a cone of axis $\vec{u}_A$ and angle at the vertex $\alpha$ such that

[Math. 23]

$$\alpha = \cos^{-1}(\vec{u}_A \cdot \vec{u}_B)$$

in camera Cartesian coordinates;
- a transformation in the global Cartesian terrestrial coordinates and a memorisation of the coordinates of the vectors $\vec{u}_A$ of the centre O of the cameras and of the angle $\alpha$ for each object of each panoramic image.

**7.** The geolocation method according to claim 6 wherein the step of determining the position of the detected objects uses:

- the position parameters of the cameras, which comprise the geolocated Cartesian coordinates ($x_0$, $y_0$, $z_0$) of the centre O of the camera device and the orientation ($\Omega$, $\Phi$, K) of each of the cameras (2a, 2b) of the camera device;
- the height and width of the original panoramic image H, W;
- the borders of the selection frames (13) containing objects detected in the panoramic images.

**8.** Geolocation method according to claim 6 or 7 wherein, the panoramic image being considered as the upper part of the surface of a sphere (120) with the camera device (100) at the centre of this sphere, the triangulation method includes determining the position of a particular detected object by means of a projection of a cone (110) directed towards the centre A of the selection frame of said object on said upper part of said surface of a sphere, said cone having as its apex the centre of the camera device and the opening of angle $\alpha$ and comprises, for a given particular object detected, a calculation of intersections of pairs of cones (110a, 110b) generated in at least two distinct panoramic images including said object and taken at at least two different locations $U_0$, $V_0$, so as to calculate by triangulation a spatial distance between the particular object detected and the positions of the centres of the camera device at said at least two different locations and to calculate a geolocated position of said particular object detected.

**9.** Geolocation method according to claim 8, wherein only the pairs of cones where the distance between their apexes is limited by a distance parameter D are taken into account, the distance parameter D being expressed in metres and selected according to the spatial frequency of photographing to reduce the number of false detections.

**10.** Geolocation method according to claim 8 or 9, wherein the method includes a validity analysis of 3D intersections I-J of said cone projections in order to reduce the number of object candidates detected and to identify the uniqueness of the objects and to determine whether intersections are sufficiently close, a validity condition of an object candidate being the fact that the directing vectors $\overrightarrow{u_A}$ and $\overrightarrow{v_A}$ of the cone pairs (110a, 110b) are distant by a distance less than a parameter d from the intersection I-J of the cones, the method further comprising extracting as valid objects representatives satisfying said validity analysis, storing their position in the global coordinate system, storing their predicted classification and storing their dimension.

**11.** Geolocation method according to claim 10, wherein the validity analysis includes a search (355) for intersection nodes and a proximity calculation between the axes of the cones to determine whether intersections are sufficiently close, by means of generating a K-D tree of the points I and J and selecting from said K-D tree pairs of cones having a minimum distance (130) less than a parameter d at the intersection I-J of the cones, the value in metres of said parameter d being selected according to the size of the classes of objects detected, and including (355), for the condition according to which the intersections are sufficiently close, an algorithm for identifying points I and J closest to the distance of the

directing vectors $\overrightarrow{u_A}$ and $\overrightarrow{v_A}$ of the intersecting pairs of cones, an algorithm for constructing spheres of influence P, Q whose radius is the radius of the cone along a perpendicular to the directing axis of the cone around the points I and J called attachment points and an algorithm validating the condition if the points I and J are mutually contained in the sphere of influence of the opposite cone, the axes of the cones being then contained in the cone opposite to the intersection.

**12.** Geolocation method according to claim 11 including, for all pairs of cones whose intersections are sufficiently close and whose directing vectors are mutually contained in the cones opposite the intersection and when two or more attachment points have been found, an analysis for detecting parasitic intersections, said analysis including a step (360) of producing a graph (600):

- for which each attachment point constitutes a node,
- for which two nodes are connected if they meet the conditions of intersections sufficiently close and directing vectors mutually contained in the cones,

said analysis furthermore including, for each related component (A1, A2, A3) of the graph (600), a choice (365) of the node (Rp1, Rp2, Rp3) having the maximum degree of connections as representing a single object and a sorting (370) by decreasing degrees of connectivity of said representatives and then an iterative process of validating and subtracting representative with the highest order and the cones converging thereto, analysing convergences of remaining cones and removing representatives found without convergent cones (375), said iterative process being repeated until all representatives have been validated or invalidated.

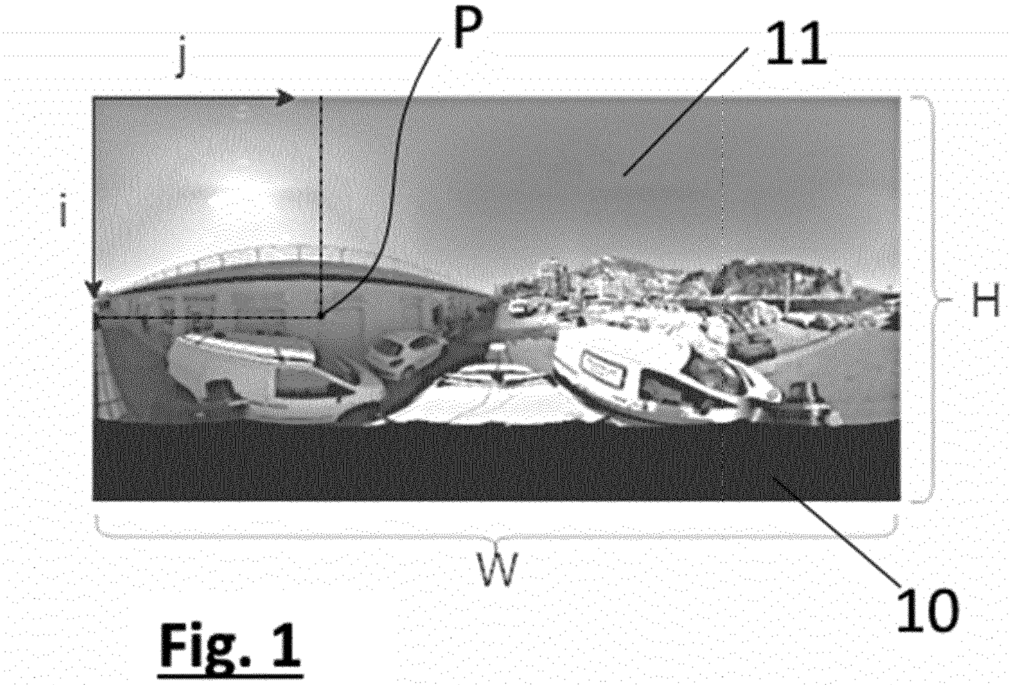


Fig. 1

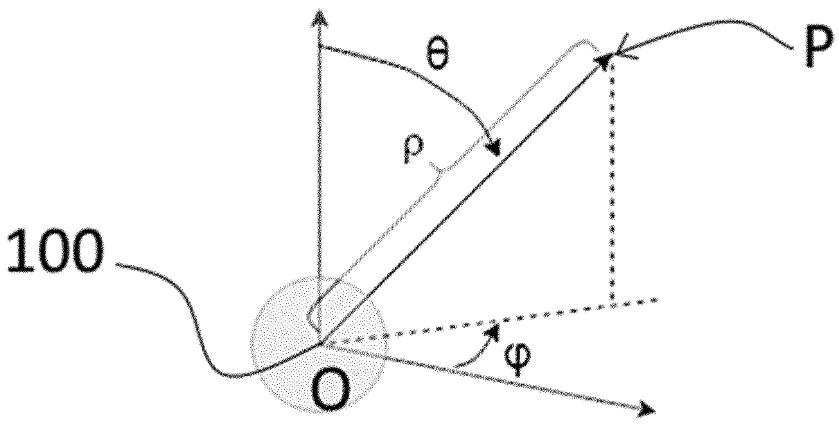


Fig.2

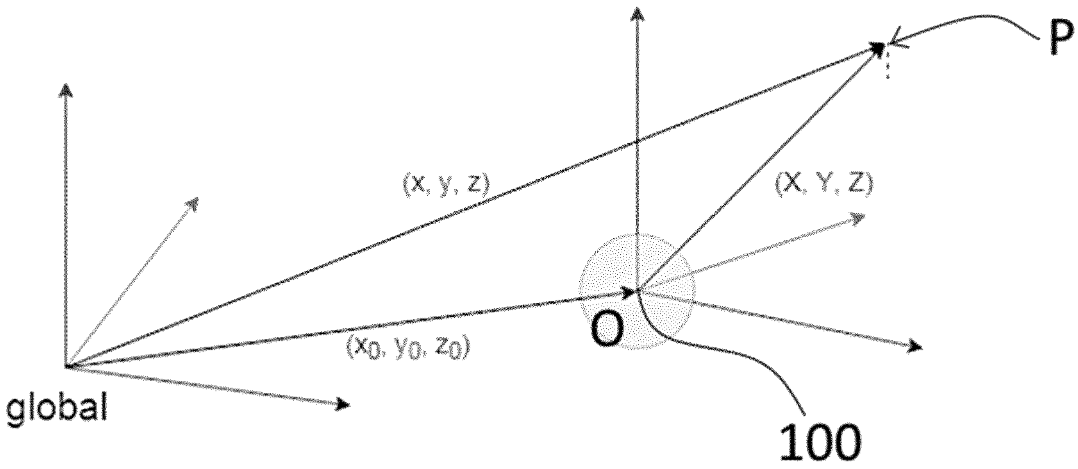


Fig. 3

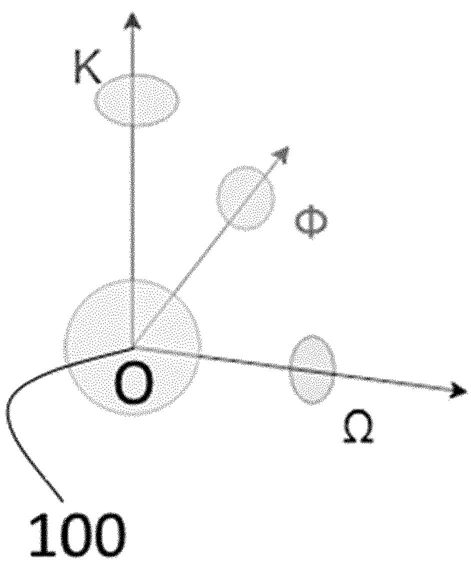


Fig. 4

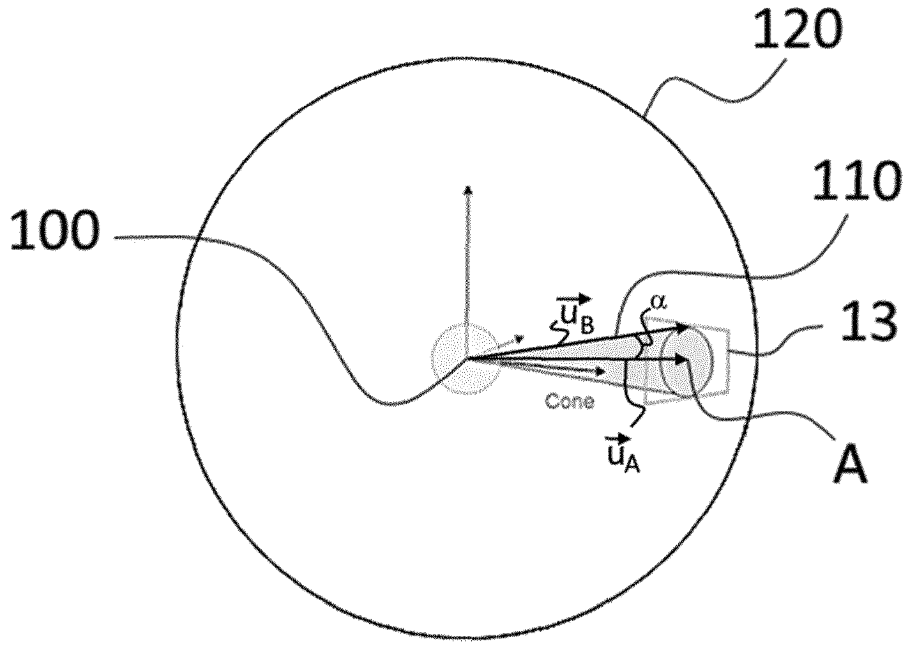


**Fig. 5**

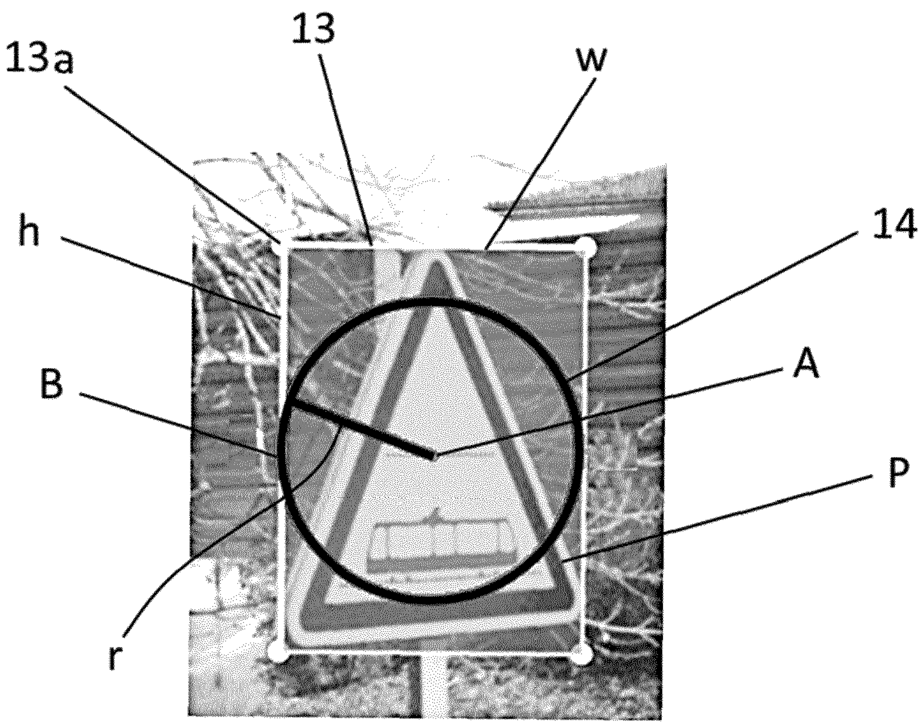


**Fig. 6**

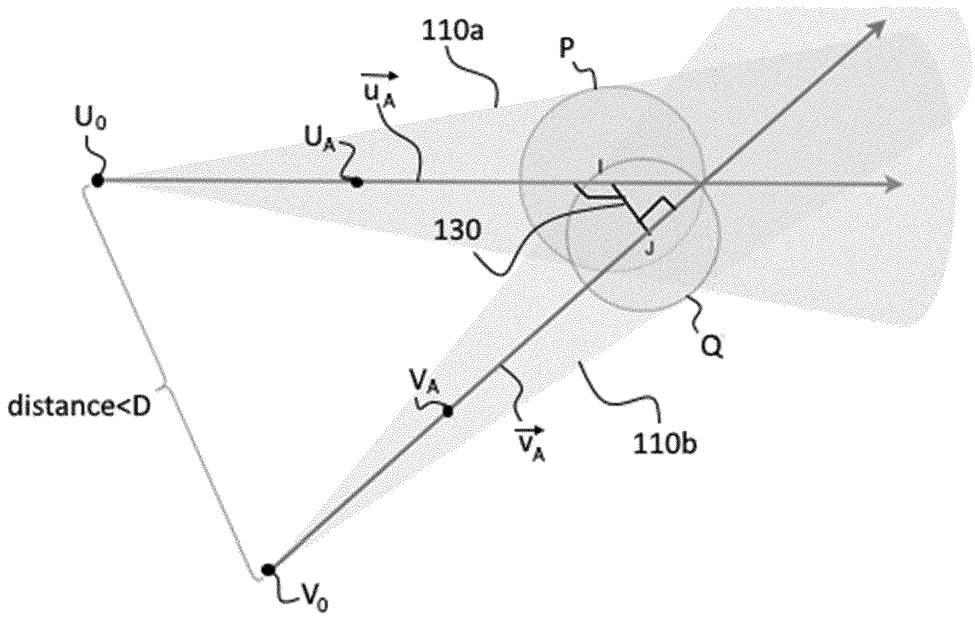
110a
P
$\overrightarrow{u_A}$
$U_0$
$U_A$
I
130
J
Q
$V_A$
distance<D
$\overrightarrow{v_A}$
110b
$V_0$

Fig. 7

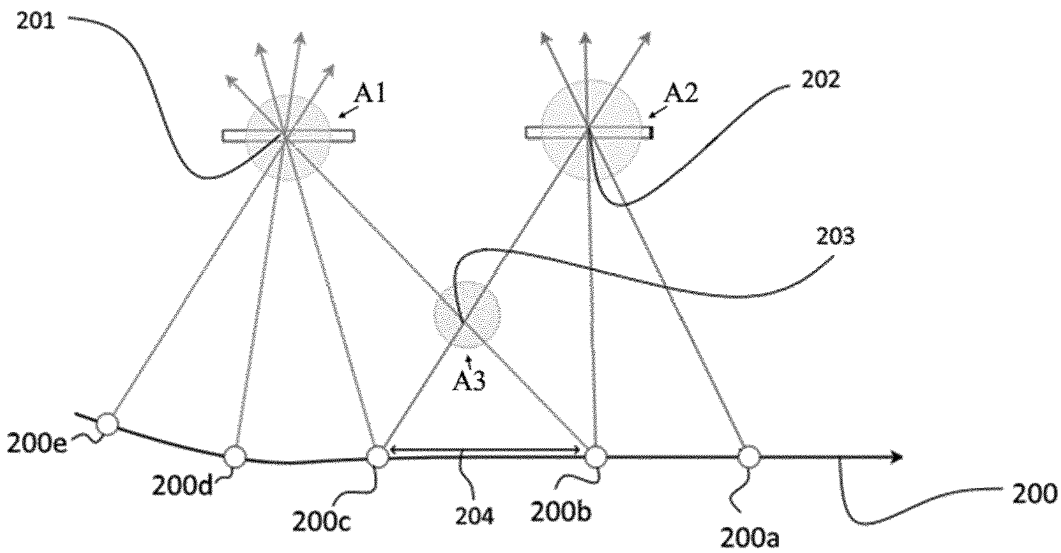
201
A1
A2
202
203
A3
200e
200d
200c
204
200b
200a
200

Fig. 8

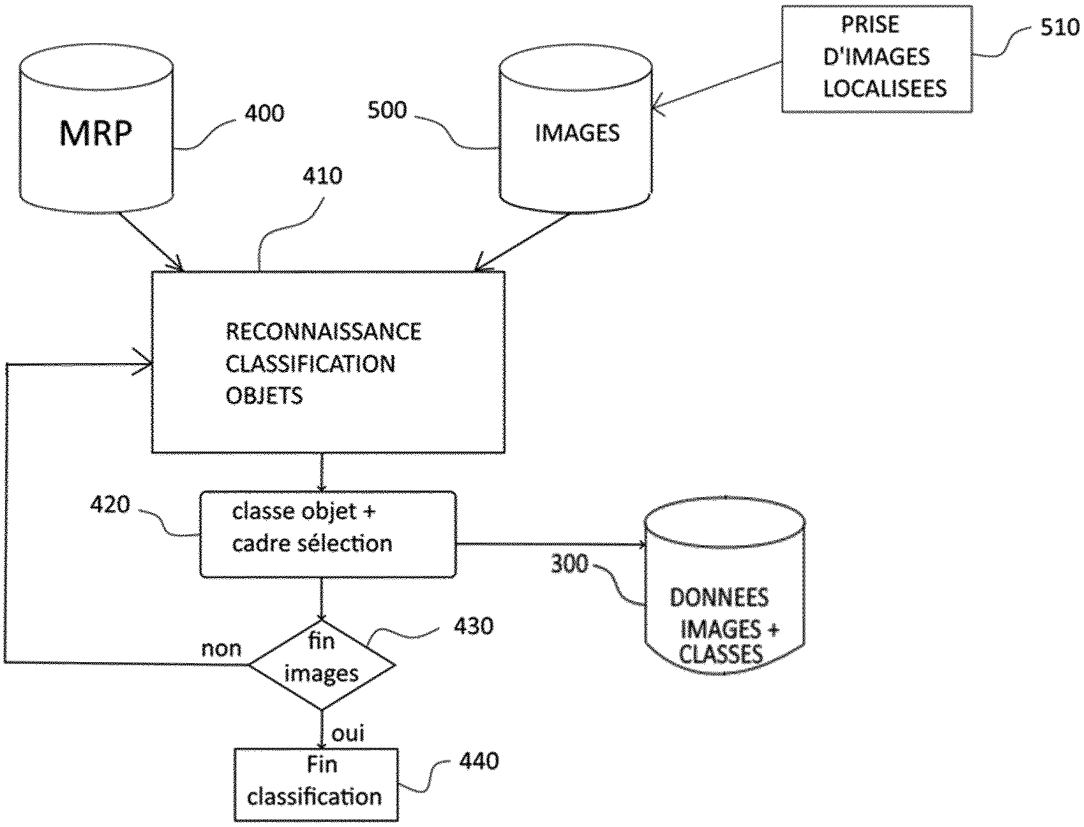
PRISE
D'IMAGES
LOCALISEES
510
MRP
400
500
IMAGES
410
RECONNAISSANCE
CLASSIFICATION
OBJETS
420
classe objet +
cadre sélection
300
DONNEES
IMAGES +
CLASSES
fin
images
430
non
oui
Fin
classification
440

Fig. 9

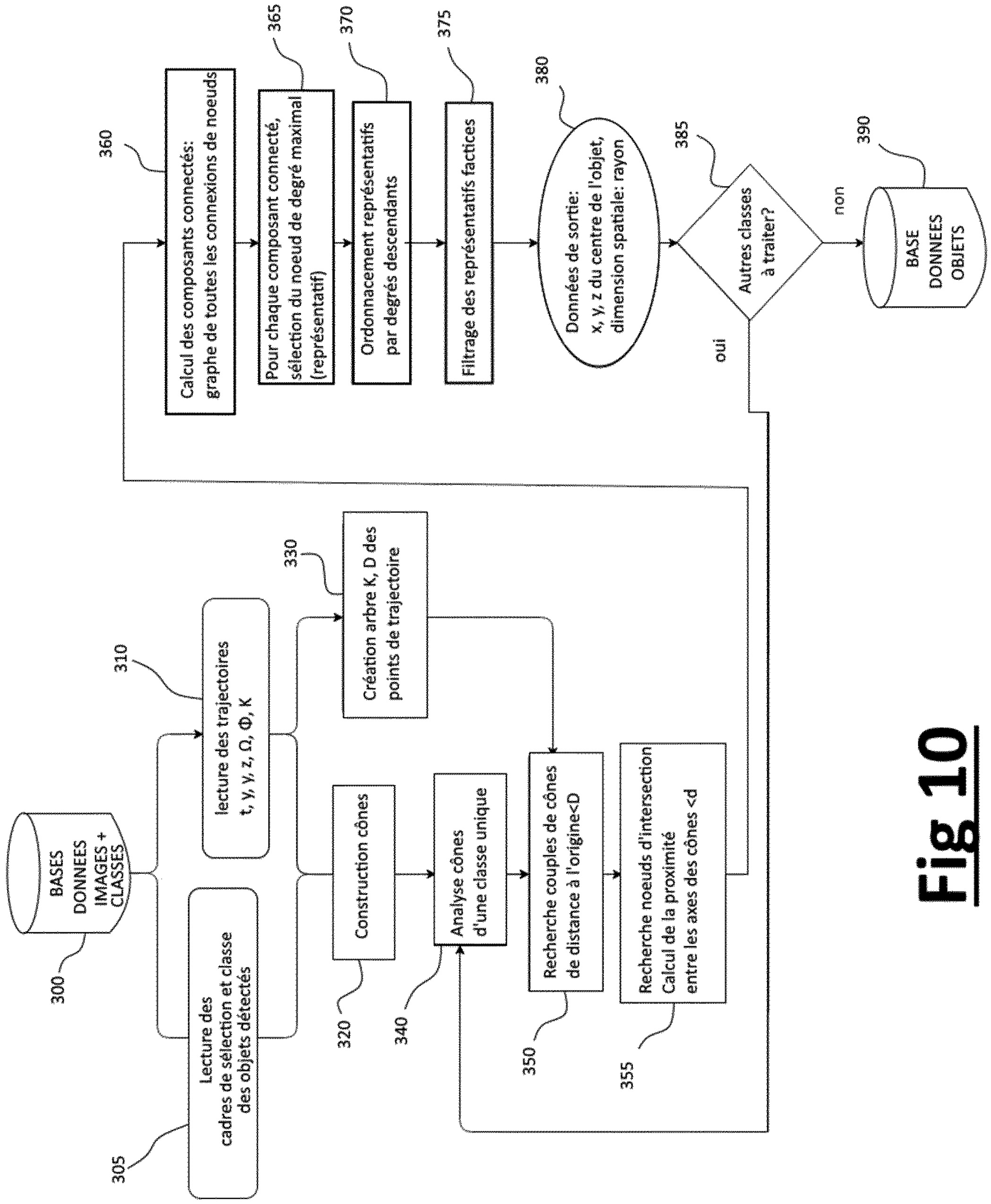
BASES DONNEES IMAGES + CLASSES
300
Lecture des cadres de sélection et classe des objets détectés
305
lecture des trajectoires t, y, γ, z, Ω, Φ, K
310
Construction cônes
320
Création arbre K, D des points de trajectoire
330
Analyse cônes d'une classe unique
340
Recherche couples de cônes de distance à l'origine<D
350
Recherche noeuds d'intersection Calcul de la proximité entre les axes des cônes <d
355
Calcul des composants connectés: graphe de toutes les connexions de noeuds
360
Pour chaque composant connecté, sélection du noeud de degré maximal (représentatif)
365
Ordonnacement représentatifs par degrés descendants
370
Filtrage des représentatifs factices
375
Données de sortie: x, y, z du centre de l'objet, dimension spatiale: rayon
380
Autres classes à traiter?
385
oui
non
BASE DONNEES OBJETS
390

Fig 10

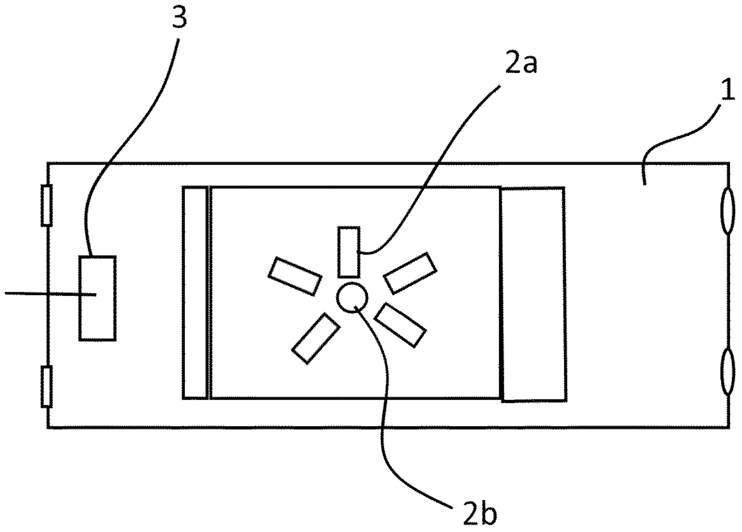


Fig. 11

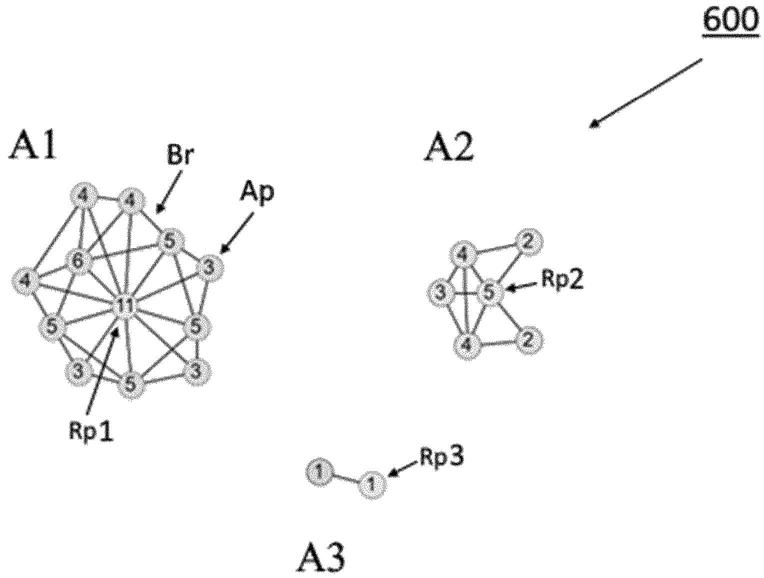


Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 2018188060 A1
- WO 2018140656 A1


### Littérature non-brevet citée dans la description


- Geometrical Analysis of Localization Error in Stereo Vision Systems. **FOOLADGAR FAHIMEH et al.** IEEE SENSORS JOURNAL. IEEE SERVICE CENTER, 01 November 2013, vol. 13, 4236-4246